# EUROPÄISCHE PATENTSCHRIFT

(11) **EP 2 638 358 B1**
(45) Veröffentlichungstag und Bekanntmachung des Hinweises auf die Patenterteilung: **07.01.2015**
(21) Anmeldenummer: 11779429.7
(22) Anmeldetag: 08.11.2011
(51) Int. Cl.: G01C 15/00, G01S 5/16

(54) **GERÄT ZUM VERMESSEN UND MARKIEREN VON RAUMPUNKTEN ENTLANG HORIZONTAL VERLAUFENDER HÖHENLINIEN**
DEVICE FOR MEASURING AND MARKING OF POINTS ALONG HORIZONTAL CONTOUR LINES
DISPOSITIF POUR MESURER ET MARQUER DES POINTS LE LONG DE COURBES DE NIVEAU HORIZONTALES

(30) Priorität: 11.11.2010 EP 10190921
(43) Veröffentlichungstag der Anmeldung: 18.09.2013
(73) Patentinhaber: Leica Geosystems AG, 9435 Heerbrugg (CH)
(72) Erfinder: SCHORR, Christian, CH-9000 St. Gallen (CH); SCHROEDER, Frank, CH-9000 St.Gallen (CH)
(74) Vertreter: Kaminski Harmann
(86) Internationale Anmeldenummer: PCT/EP2011/069636
(87) Internationale Veröffentlichungsnummer: WO 2012/062747

(56) Entgegenhaltungen:
- EP-A1- 1 001 251
- WO-A1-96/18083
- DE-A1-102007 049 123
- DE-A1-102008 001 617

## Beschreibung

Die Erfindung betrifft ein Konstruktionsvermessungsgerät zum Vermessen und Markieren von Raumpunkten im Rahmen von Bau und/oder Ausbau - insbesondere Innenausbau - von Gebäuden nach dem Oberbegriff des Anspruchs 1 und ein zugehöriges Verfahren nach dem Oberbegriff des Anspruchs 9 zum Vermessen und Markieren von Raumpunkten in einer gemeinsamen Horizontalebene mittels des erfindungsgemässen Konstruktionsvermessungsgeräts sowie ein Computerprogrammprodukt zur Bereitstellung, Steuerung und Durchführung des Verfahrens nach dem Oberbegriff des Anspruchs 15.

In vielen Anwendungen werden sichtbare oder unsichtbare Referenzlinien projiziert, die entweder für das menschliche Auge oder für elektronische Systeme als eine Referenz dienen, welche auch eine automatische Positionierung oder Maschinenführung erlaubt. Hierbei erfolgt die Erzeugung der Referenzlinien zumeist durch Aufweitung eines Laserstrahls, was insbesondere für gerade Linien möglich ist, oder aber durch rotierende Projektion eines Laserpunkts.

Ein Beispiel für dazu geeignete technische Vorrichtungen sind Rotationslaser, die zur Festlegung einer Ebene mit sichtbarem oder unsichtbarem Laserstrahl dienen und seit vielen Jahren in Verwendung sind, beispielsweise im Bau- oder im Industriegewerbe. Sie sind ein wertvolles Hilfsmittel, um Konstruktionslinien auf horizontalen, vertikalen aber auch definiert schiefen Ebenen zu markieren. Bisherige Rotationslaser haben aber den Nachteil, nur solche Projektionsebenen erzeugen zu können, welche den Ausgangspunkt des Laserstrahls enthalten. Zur Projektion von Raumpunkten entlang einer Linie in einer vordefinierten Horizontalebene muss der Lichtaussendepunkt eines herkömmlichen Rotationslasers also genau in dieser Ebene positioniert und das Lasermodul exakt auf horizontale Lichtaussendung justiert sein (sowie die Rotationsachse exakt vertikal ausgerichtet sein). Der Arbeitsbereich für den Einsatz eines Rotationslasers zur Markierung einer Horizontalebene ist also auf den Einstellbereich für die Höhe einer Basis, auf welcher der Rotationslaser montiert ist, beschränkt. Um eine vertikale Achse rotierende Projektion eines Laserstrahls durch einen herkömmlichen Rotationslaser in eine nicht-horizontale (z.B. schräg nach oben gerichtete) Richtung führt dazu, dass näher gelegene Raumpunkte in geringerer Höhe als weiter entfernt gelegene Raumpunkte projiziert werden.

In der WO 96/18083 werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in dieser Schrift beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Es wird auch eine Ausführungsform zur Durchführung absoluter Vermessungen und Markierungen offenbart, wozu eine System-Nivellierung durchgeführt wird, die das mathematische Modell zur Berechnung der Raumpunktkoordinaten in Beziehung zu den tatsächlichen Richtungen im Raum in Beziehung setzt, womit auch z.B. eine Fällung von Loten im Raum möglich sei.

Es wird jedoch keine automatisch ablaufende Funktionalität offenbart, mit der auf einfache Weise in einer gemeinsamen Horizontalebene liegende Raumpunkte angefahren und markiert werden könnten, welche den Emissionspunkt des Laserstrahls nicht enthält, ebenso wenig wie eine automatisierte sequentielle Vermessung mehrerer auf einer Isohöhenlinie verlaufender Raumpunkte, zu vergleichen beispielsweise mit einem Scan.

In der US 6,547,397 werden ein Laserprojektionssystem zur Projektion eines dreidimensionalen Bildes auf ein Objekt und ein entsprechendes Projektionsverfahren offenbart, wobei ein Koordinatensystem durch Auswahl von mindestens drei Referenzpunkten auf dem Objekt festgelegt wird, ein Laserstrahl auf jeden dieser Referenzpunkte projiziert wird, und der Abstand zu jedem der Referenzpunkte durch Bestimmung der Laufzeit des Laserstrahls und der horizontalen und vertikalen Winkel zu dem Objekt und daraus die dreidimensionale Orientierung des Laserprojektors relativ zu dem Objekt ermittelt wird. Basierend auf dieser Offenbarung ist zwar eine dreidimensionale Objektvermessung bzw. eine entsprechende Objektprojektion möglich. Jedoch ergeben sich aus dieser Schrift keinerlei Hinweise auf eine Funktionalität, mit der auf einfache Weise Raumpunkte in einer Horizontalebene erzeugt werden könnten, welche den Emissionspunkt des Laserstrahls nicht enthält.

In der EP 1 733 185 werden eine Vorrichtung und ein Verfahren offenbart, womit speziell Kanten auf einer polygonalen, ansonsten ebenen Oberfläche genau vermessen werden sollen. Hinweise auf eine Funktionalität, mit der auf einfache Weise Raumpunkte in einer Horizontalebene erzeugt werden könnten, welche den Emissionspunkt des Laserstrahls nicht enthält, werden auch in dieser Schrift nicht gegeben. Auch gibt es keine Hinweise auf Vermessung oder Projektion von Räumpunkten auf beliebigen, nicht polygonal ausgebildeten Oberflächen.

Die EP 2 053 353 offenbart ein referenzlinienprojizierendes Gerät mit einem elektro-optischen Distanzmesser. Gemäss der Lehre dieser Anmeldeschrift wird ein optischer Referenzstrahl, insbesondere ein Laserstrahl, entlang eines definierten Referenzpfads geführt. Im Zusammenhang mit dem Durchlaufen des Referenzpfades erfolgt eine Entfernungsmessung zu mindestens einem Punkt des Referenzpfads durch Aussenden eines zum Referenzstrahl parallelen oder koaxialen Messstrahls oder Verwenden des Referenzstrahls als Messstrahl. Nach dem Empfangen von Anteilen des zurückgeworfenen Messstrahls wird ein Signal aus diesen Anteilen abgeleitet und eine Distanz zu dem mindestens einen Punkt aus dem Signal bestimmt, wobei das Führen entlang des Referenzpfads mindestens einmal wiederholt wird und bei jedem Durchlaufen des Referenzpfads für den mindestens einen Punkt jeweils eine Distanz oder distanzbezogene Grösse ermittelt wird. Bei winkelsynchronen Distanzmessungen werden also gleiche Punkte mehrfach abgetastet.

Mittels Integration eines Distanzmessers ermöglicht das in der EP 2 053 353 offenbarte System auch eine Steuerung der Projektion anhand einer ermittelten Oberflächentopographie. Insbesondere wird offenbart, dass nach Bestimmung eines Oberflächenprofils eine Projektion auf eine gekrümmte Oberfläche so angepasst werden kann, dass Verzerrungen durch die gekrümmte Oberfläche kompensiert werden und die Projektion der unverzerrten Kontur eines auszumessenden bzw. markierenden Objekts entspricht.

Auch in der EP 2 053 353 wird jedoch keine Funktionalität offenbart oder nahe gelegt, mit der auf einfache Weise Raumpunkte in einer Horizontalebene erzeugt werden könnten, welche den Emissionspunkt des Laserstrahls nicht enthält.

EP 1 001 251 A1 offenbart ein Vermessungsgerät mit Basis und drenbaren Oberteil, zwei Drehantrieben, Winkelmessern und einer Distanzmeßeinheit; ferner können beliebige Linienmuster einschließlich horizontaler Linien an eine ebene Wand projiziert werden.

Aufgabe der Erfindung ist die Bereitstellung eines Konstruktionsvermessungsgeräts zum Vermessen und Markieren von Raumpunkten, insbesondere wobei mit hohem Bedienkomfort in beliebigen Höhen im Raum - ohne Standortwechsel des Geräts - jeweils eine in einer definierten Horizontalebene verlaufende Referenzlinie an einer Oberfläche erzeugt und indiziert werden kann. Insbesondere soll die Notwendigkeit der Positionierung des Geräts in Höhe der gewünschten, zu indizierenden Horizontalebene vermieden werden. Eine weitere Aufgabe der Erfindung ist es, einen automatischen Ablauf einer Vermessung bzw. Projektion oder Markierung mehrerer Raumpunkte in einer gemeinsamen Horizontalebene zu ermöglichen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Gegenstand der Erfindung ist ein Konstruktionsvermessungsgeräts als referenzlinienprojizierendes System zum Vermessen und Markieren von Raumpunkten, ausgehend von einem ersten vorgegebenen Raumpunkt entlang einer Linie an einer beliebig geformten Oberfläche als einer Projektionsoberfläche in einer vordefinierten Horizontalebene in einer Horizontalebenenhöhe einer Konstruktion - insbesondere eines Gebäudes. Das System umfasst eine Basis und ein an der Basis um eine Drehachse innerhalb eines Winkelbereichs eines Azimutalwinkels drehbar gelagertes Oberteil. Am Oberteil ist eine um eine Schwenkachse innerhalb eines Winkelbereichs eines Elevationswinkels schwenkbar gelagerte, mit einer zur Emission eines Laserstrahls von einem Lichtausgangspunkt ausgebildeten Laserquelle und einem Laserlicht-Detektor ausgestattete Anzieleinheit angeordnet, welche eine Distanzmessfunktionalität bereitstellt. Insbesondere kann dabei der Lichtausgangspunkt in einer Standhöhe angeordnet werden, welche verschieden von der Horizontalebenenhöhe ist. Das erfindungsgemässe Konstruktionsvermessungsgerät umfasst des Weiteren eine Auswerte- und Steuereinheit.

Das System umfasst dabei einen ersten und zweiten Drehantrieb, welche das Oberteil bzw. die Anzieleinheit antreibbar bzw. in einem Azimut- und einem Elevationswinkel ausrichtbar machen. Eine räumliche Ausrichtung der Anzieleinheit gegenüber der Basis ist über zwei Winkelmesser zur Bestimmung des Azimut- und des Elevationswinkels erfassbar. Die Auswerte- und Steuereinheit sind mit der Laserquelle, dem Laserlicht-Detektor sowie den Winkelmessern verbunden, um eine erfasste Distanz einer entsprechenden Ausrichtung (d.h. dabei erfassten Azimut- und Elevationswinkeln) zuzuordnen und somit Koordinaten für Raumpunkte zu bestimmen.

Erfindungsgemäss weist das Konstruktionsvermessungsgerät eine Horizontalebenen-Indikationsfunktionalität auf, welche nach Auslösung zumindest teilweise automatisch abläuft. Ausgehend von einem bekannten, definierten ersten Raumpunkt in der vordefinierten Horizontalebene, bzw. durch den eine Horizontalebene vordefiniert wird, und dessen Raumkoordinaten in einer ersten Ausrichtung angemessen und gespeichert werden, wird die Anzieleinheit in eine beliebige zweite azimutale Ausrichtung gefahren. Mithilfe der Horizontalebenen-Indikationsfunktionalität wird die Anzieleinheit automatisch auf einen zweiten Raumpunkt auf der Oberfläche ausgerichtet, welcher in der zweiten azimutalen Ausrichtung und in derselben Horizontalebene wie der erste Raumpunkt angeordnet ist. Dazu wird der Elevationswinkel für die Aussendung des Laserstrahls von der Anzieleinheit automatisch zur Anvisierung des zweiten Raumpunkts an die durch die Lage des ersten Raumpunkts definierte Horizontalebenenhöhe angepasst.

Mit anderen Worten weist also das Konstruktionsvermessungsgerät erfindungsgemäss eine nach Auslösung zumindest teilweise automatisch ablaufende Horizontallinien-Projektionsfunktionalität zum Vermessen und Markieren von Raumpunkten entlang einer in einer bestimmten Horizontalebene verlaufenden Horizontallinie an einer beliebig geformten Oberfläche auf, in deren Rahmen, ausgehend von einem bekannten, die Horizontalebene definierenden ersten Raumpunkt, nach Änderung der azimutalen Ausrichtung der Anzieleinheit jeweils derart automatisch gesteuert durch die Auswerte- und Steuereinheit mittels des ersten und/oder des zweiten Drehantriebs die elevative Ausrichtung der Anzieleinheit geändert wird, dass genau solche Raumpunkte mit dem Laserstrahl angefahren und markiert werden, die - in der entsprechenden jeweiligen aktuellen azimutalen Ausrichtung - auf der Horizontallinie liegen.

Der Begriff der Horizontalebene ist dabei insbesondere bezogen auf den dazu senkrecht verlaufenden Schwerefeld-Vektor der Erde. Die aktuelle Ausrichtung des Geräts bezüglich des Schwerefeld-Vektors der Erde kann vorzugsweise mit - insbesondere in die Basis des Geräts integrierten - Neigungssensormitteln bestimmt werden, deren Messdaten ebenfalls an die Auswerte- und Steuereinheit übermittelt werden. Daraufhin kann dann die Bestimmung von Raumkoordinaten des jeweiligen Lotpunktes beruhen. Wie dem Fachmann bekannt, können die Neigungssensormittel dabei dazu ausgebildet sein, die Neigung gegenüber dem Schwerefeld (bzw. gegenüber einer senkrecht zum Schwerefeld ausgerichteten Horizontalebene) in zwei Richtungen (d.h. um zwei Achsen) zu bestimmen. Beispielsweise können dafür zwei ein-achsige Neigungssensoren oder ein zwei-achsiger Neigungssensor infrage kommen (wie optoelektronische Libellensensoren, ein optoelektronischer Öltopf oder eine optoelektronische Dosenlibelle). Ein Beispiel für einen solchen öltopfartigen Neigungssensor, mit welchem man die Neigung zumindest um zwei Achsen bestimmen kann, ist detailliert in der Europäischen Patentanmeldung EP 2 423 640 A1 beschrieben. Alternativ kann eine Bestimmung einer vertikalen Ausrichtung, parallel zum Schwerefeld-Vektor der Erde, auch durch die Vermessung der Endpunkte eines frei pendelnd gelagerten Lotstabs bzw. Senklots erfolgen.

Eine Ebene kann aber auch dann als Horizontalebene bestimmt und angenommen werden, auch wenn kein Bezug zur Ausrichtung des Schwerefeld-Vektors hergestellt ist. Beispielsweise kann vorab eine als horizontal verlaufend angenommene Zimmerdecke eingemessen werden und die Horizontalität weiterer Ebenen daran aufgehängt werden.

Insbesondere ist die Horizontallinien-Projektionsfunktionalität derart ausgestattet, dass, ausgehend vom ersten Raumpunkt, weitere Raumpunkte in der vordefinierten Horizontalebene innerhalb eines Azimutwinkelbereichs zwischen vordefinierten Raumpunkten vermessen bzw. projiziert werden, insbesondere in einem vordefinierten Abstand zwischen aufeinanderfolgend zu vermessenden bzw. projizierenden Raumpunkten.

Zum reaktiv nach Änderung der azimutalen Ausrichtung - insbesondere fliegend beim Ändern der azimutalen Ausrichtung - erfolgenden Anpassen der elevativen Ausrichtung der Anzieleinheit können dabei fortlaufend
- die räumliche Ausrichtung der Anzieleinheit gegenüber der Basis über die zwei Winkelmesser und
- die Distanz zu aktuell anvisierten Raumpunkten auf der Oberfläche
erfasst werden, insbesondere mit einer Rate von mindestens 10Hz.

Gemäss einer Weiterbildung kann im Rahmen der Horizontallinien-Projektionsfunktionalität die azimutale Ausrichtung der Anzieleinheit automatisch gesteuert durch die Auswerteund Steuereinheit mittels des ersten und/oder des zweiten Drehantriebs fortlaufend innerhalb eines definierten azimutalen Winkelbereichs geändert werden, insbesondere mit einer azimutalen Winkelgeschwindigkeit von mindestens 12° pro Sekunde, und dabei jeweils fortlaufend die elevative Ausrichtung der Anzieleinheit derart automatisch fliegend - d.h. zeitlich parallel zum fortlaufenden Ändern der azimutalen Ausrichtung - angepasst werden, dass die Projektion des Laserstrahls auf der Oberfläche stets entlang der Horizontallinie geführt wird.

Somit wird "on-the-fly" zur Drehung um die vertikale Achse die elevative Ausrichtung der Anzieleinheit (13) jeweils derart - in einem Echtzeit-Modus - angepasst, dass sich die Projektion des Laserstrahls (14) auf der Oberfläche entlang der Horizontallinie (15) hangelt.

Es wird des Weiteren bevorzugt, dass die Horizontallinien-Projektionsfunktionalität derart ausgestattet ist, dass wahlweise, ausgehend vom ersten Raumpunkt, eine Vermessung bzw. Projektion von Raumpunkten innerhalb eines Azimutalwinkelbereichs von 360° ermöglicht wird.

D.h., dass dabei die azimutale Ausrichtung der Anzieleinheit automatisch fortlaufend innerhalb eines azimutalen Winkelbereichs von 360° geändert wird, insbesondere mit einer azimutalen Winkelgeschwindigkeit von mindestens 24° pro Sekunde, im Speziellen 36° pro Sekunde. Dadurch kann beispielsweise eine Isohöhenlinie in einem Innenraum an allen Wänden eines Zimmers angezeigt werden.

Um die Isohöhenlinie nun über einen bestimmten gewünschten Zeitraum hinweg (etwa während einer Installation) fortschreitend anzuzeigen, kann die azimutale Ausrichtung der Anzieleinheit automatisch derart innerhalb des bestimmten azimutalen Winkelbereichs (ggf. auch wiederholt um 360°) fortlaufend geändert werden, dass die Projektion des Laserstrahls auf der Oberfläche wiederholt, d.h. in mehreren Durchgängen, entlang der Horizontallinie geführt wird.

Dabei kann vorgesehen sein, dass im Rahmen eines oder mehreren Initial-Durchgängen des Führens der Projektion des Laserstrahls entlang der Horizontallinie Vermessungsdaten für auf der Horizontallinie liegende Raumpunkte erfasst und gespeichert werden und diese initial erfassten und gespeicherten Vermessungsdaten dann verwendet werden, um bei nachfolgenden Durchgängen des Führens der Projektion des Laserstrahls entlang der Horizontallinie das fliegende Anpassen der elevativen Ausrichtung der Anzieleinheit beim Ändern der azimutalen Ausrichtung optimiert wird, insbesondere sodass das Führens der Projektion des Laserstrahls entlang der Horizontallinie dadurch mit höherer Geschwindigkeit und/oder präziser erfolgt.

Mit anderen Worten ist die Horizontallinien-Projektionsfunktionalität gemäss dieser Weiterbildung also so ausgestattet, dass, ausgehend vom ersten Raumpunkt, eine Vermessung bzw. Projektion von Raumpunkten zwischen nacheinanderfolgend zu vermessenden bzw. projizierenden Raumpunkten entlang einer dazwischen befindlichen Linie (Horizontallinie) wiederholt erfolgt, wobei, ausgehend von gespeicherten Vermessungsdaten mit Azimut- und Elevationswinkeln für vorangehend vermessene oder projizierte Raumpunkte, eine Änderung der Ausrichtung der Anzieleinheit in einem Elevationswinkel mit einer erhöhten Geschwindigkeit erfolgt und damit auch eine erhöhte Geschwindigkeit für eine Vermessung bzw. Projektion von Raumpunkten in der vordefinierten Horizontalebene ermöglicht wird.

Zusätzlich kann im Rahmen der Horizontallinien-Projektionsfunktionalität zur Optimierung des fliegend zum Ändern der azimutalen Ausrichtung erfolgenden Anpassens der elevativen Ausrichtung der Anzieleinheit ein mathematisches Modell zur Beschreibung der Form der Oberfläche herangezogen werden. Insbesondere kann dabei die Oberfläche als ebene Fläche, Zylindermantelfläche oder Kugeloberfläche angenommen werden. Im Speziellen kann das mathematische Modell in einem Speichermedium der Auswerte- und Steuereinheit abgelegt sein und/oder auch anhand von gespeicherten oder speziell dafür erfassten Messdaten bezüglich Distanz und Winkeln zu auf der Oberfläche liegenden Raumpunkten erstellt werden, insbesondere mittels einer Best-Fit-Methode.

D.h., dass für eine - insbesondere beschleunigte - Anpassung des einzustellenden Elevationswinkels beim oder nach Änderung der horizontalen/azimutalen Ausrichtung der Anzieleinrichtung in einer Tabelle abgelegte Vermessungs- bzw. Einstellwinkeln für Elevationswinkel zu den jeweiligen Azimutwinkeln verwendet und für die erneute Elevationswinkeleinstellung abgerufen werden können. Im Falle von geometrisch relativ einfach geformten Oberflächen als Projektionsflächen, wie beispielsweise gegebenenfalls winklig zueinander angeordneten, ansonsten ebenen Oberflächen oder Oberflächen mit einer einfach mathematisch beschreibbaren Oberflächenkontur, wie beispielsweise elliptischen oder kreisförmigen bzw. zylindrischen Oberflächen (z.B. von Litfass-Säulen), kann ein Konturverlauf einer Projektionsfläche auch aufgrund vorbekannter Daten in einem Speichermedium der Auswerteund Steuereinheit abgelegt sein oder nach einer ersten Vermessung oder Projektion bestimmt und dort abgelegt werden, wodurch - insbesondere nachfolgende - Vermessungen oder Horizontallinien-Projektionen auf der gleichen Projektionsfläche in ihrem Ablauf ebenfalls beschleunigt werden können. Durch Ablegen von bereits vermessenen Punkten (in einem Speicher) und späteres Abrufen der entsprechenden Messwerte bei Bedarf oder durch Miteinbeziehung von Annahmen hinsichtlich der Geometrien der Oberflächen kann die Projektion (bzw. zeitlich parallel erfolgende Vermessung) der Raumpunkte entlang einer Isohöhenlinie also mit erhöhter Drehrate erfolgen (und z.B. Drehraten etwa zwischen 0,1 und 5 U/s erreicht werden).

Mit anderen Worten: Die Horizontallinien-Projektionsfunktionalität ist bevorzugt derart ausgestattet, dass der Elevationswinkel automatisch für die Aussendung des Laserstrahls für sequentiell in der mit dem ersten Raumpunkt in der gemeinsamen Horizontalebene anzuvisierende weitere Raumpunkte, bei unterschiedlichen horizontalen Ausrichtungen der Anzieleinheit, angepasst wird. Dazu wird, alternativ oder in Kombination, der erforderliche Elevationswinkel zur sequentiellen Projektion der weiteren Raumpunkte iterativ aus Messdaten bezüglich Distanz sowie Azimut- und Elevationswinkeln zu anvisierten Raumpunkten oder unter Verwendung einer mathematischen Funktion zur Beschreibung der Oberflächenform der Projektionsfläche bestimmt.

Zwecks einer beschleunigten Anpassung eines einzustellenden Elevationswinkels an unterschiedliche Azimutwinkel entsprechend unterschiedlicher horizontaler Ausrichtung der Anzieleinrichtung können insbesondere auch mathematische Funktionen zur Beschreibung der Oberflächenform der Projektionsfläche in einem Speichermedium der Auswerte- und Steuereinheit abgelegt sein und im Bedarfsfall abgerufen werden. Dabei können diese mathematischen Funktionen zur Beschreibung einer Oberflächenkontur vorab für bekannte Oberflächen im Speichermedium bereits abgelegt sein oder auch, in einem ersten Vermessungs- bzw. Projektionsschritt bzw. -durchlauf aus Messdaten bezüglich Distanz sowie Azimut- und Elevationswinkeln zu in einer gemeinsamen Horizontalebene anvisierten Raumpunkten bestimmt und für spätere Vermessungs- bzw. Projektionsvorgänge abrufbar sein.

Gemäss eines weiteren Aspekts kann die Horizontallinien-Projektionsfunktionalität auch derart ausgestattet sein, dass nach Vorgabe einer gewünschten Pfadlänge für die Horizontallinie auf der Oberfläche, ausgehend vom ersten Raumpunkt, die azimutale Ausrichtung der Anzieleinheit automatisch gesteuert durch die Auswerte- und Steuereinheit mittels des ersten und/oder des zweiten Drehantriebs solange fortlaufend geändert wird, bis mit der Projektion des Laserstrahls entlang der Horizontallinie auf der Oberfläche die gewünschte Pfadlänge abgefahren ist.

Ausgehend vom ersten Raumpunkt kann dann also ein vorgesehener Abstand zu nachfolgend zu vermessenden bzw. projizierenden Raumpunkten durch einen Abstand auf der Projektionsfläche (entlang des Pfades der Horizontallinie auf der Oberfläche) definiert sein.

Die Auswerte- und Steuereinheit als eine Kontrolleinheit zur Verarbeitung und Anzeige der Daten kommuniziert mit dem Laserlicht-Detektor bzw. einem Sensor, wobei Kontrolleinheit und Sensor physisch getrennt und mittels drahtloser oder kabelgeführter Kommunikationsverbindungen miteinander verbunden oder eine Einheit sein können. Zur Ausrichtung des Laserstrahls auf zu vermessende oder zu projizierende Raumpunkte kann mindestens der Laserstrahl selbst als ein Messstrahl dienen. Zur Unterstützung eines Bedieners für die Anvisierung eines Raumpunkts kann das Konstruktionsvermessungsgerät zusätzlich mit einer optischen Anzielhilfe, z.B. einer Überblickskamera oder einer so genannten "Viewfinder-Camera", ausgestattet sein, deren Bild auf einem Display der Kontrolleinheit dargestellt werden kann.

Die Anzieleinheit kann dabei derart ausgebildet sein, dass der von der Laserquelle emittierbare Laserstrahl als Messund Markierlaserstrahl dient und anhand an der Objekt-Oberfläche reflektierter Anteile des Laserstrahls, die durch den Laserlicht-Detektor empfangen werden, die Distanz zu dem mit dem Laserstrahl angezielten Raumpunkt der Objekt-Oberfläche durch die Auswerte- und Steuereinheit ermittelbar ist.

Alternativ kann jedoch der Laserstrahl auch mehrere - z.B. auch von unterschiedlichen Quellen emittierte - Anteile aufweisen, insbesondere einen Anteil zur Verwendung als Markierlaserstrahl und einen Anteil zur Verwendung als Messlaserstrahl, der parallel oder koaxial zum Markierlaserstrahl ausgesendet wird. Die Anteile können dabei beispielsweise eine unterschiedliche Wellenlänge aufweisen, beispielsweise eine Wellenlänge im Bereich des sichtbaren Lichts für den Markierlaserstrahl und eine Wellenlänge im Bereich des IR- oder NIR-Lichts für den Messlaserstrahl. Dafür kann die Anzieleinheit auch derart ausgebildet sein, dass die Laserquelle zwei Teillaserquellen aufweist, die separat zur Aussendung eines ersten Anteils des Laserstrahls als Markierlaserstrahl im sichtbaren Wellenlängenbereich bzw. eines - koaxial oder geringfügig parallel versetzt zum Markierlaserstrahl verlaufenden - zweiten Anteils des Laserstrahls als Messlaserstrahl im nahen infraroten Wellenlängenbereich ausgebildet sind.

Ein weiterer Gegenstand der Erfindung ist ein Verfahren zum Vermessen und Markieren von Raumpunkten in einer diesen Raumpunkten gemeinsamen Horizontalebene einer Konstruktion mittels eines erfindungsgemässen Konstruktionsvermessungsgeräts nach einer der vorgenannten Ausführungsformen. Dem erfindungsgemässen Verfahren folgend, wird zunächst die Anzieleinheit ausgerichtet und ein Laserstrahl auf einen ersten Raumpunkt in einer ersten horizontalen Ausrichtung ausgesandt. Der erste Raumpunkt wird angemessen, und seine Raumkoordinaten werden gespeichert. Dann wird die Anzieleinheit in eine beliebige zweite horizontale Ausrichtung gefahren. Nach Auslösen der erfindungsgemässen Horizontallinien-Projektionsfunktionalität, wird die Anzieleinheit automatisch auf einen zweiten Raumpunkt ausgerichtet, der in der zweiten horizontalen Ausrichtung und in derselben Horizontalebene wie der erste Raumpunkt angeordnet ist. Dabei wird der Elevationswinkel für die Aussendung des Laserstrahls von der Anzieleinheit automatisch zur Anvisierung des zweiten Raumpunktes an die durch die Lage des ersten Raumpunkts definierte Horizontalebenenhöhe angepasst und damit der Laserstrahl auf der Projektionsfläche entlang einer Linie in der vordefinierten Horizontalebene geführt.

Weitere Ausführungsformen des erfindungsgemässen Verfahrens sind in den abhängigen Ansprüchen bzw. oben bereits als Weiterbildungen von der erfindungsgemässen Horizontallinien-Projektionsfunktionalität des Konstruktionsvermessungsgeräts analog beschrieben.

Ein weiterer Gegenstand der Erfindung ist ein Computerprogrammprodukt mit Programmcode, der auf einem maschinenlesbaren Träger gespeichert ist, zur Bereitstellung, Steuerung und Durchführung des erfindungsgemässen Verfahrens bzw. der Horizontallinien-Projektionsfunktionalität des erfindungsgemässen Konstruktionsvermessungsgeräts nach einer der vorgenannten Ausführungsformen. Vorzugsweise wird das Programm auf einer als Auswerte- und Steuereinheit des erfindungsgemässen Konstruktionsvermessungsgeräts ausgebildeten elektronischen Datenverarbeitungseinheit ausgeführt.

Ein weiterer Gegenstand der Erfindung ist die Verwendung des Konstruktionsvermessungsgeräts als isohöhenlinienprojizierendes System nach einer der vorangehend beschriebenen Ausführungsformen zum Vermessen und Markieren von Raumpunkten in einer vordefinierten Horizontalebene einer Konstruktion, insbesondere eines Gebäudes; zur Projektion auf Bleche zur Ausrichtung von zu montierenden Teilen, insbesondere im Flugzeug- und Automobilbau, zur Unterstützung bei einem Werkzeugeinsatz wie beispielsweise zur Erzeugung von Bohrungen; oder zur allgemeinen Montageunterstützung, beispielsweise zur Projektion auf Ausnehmungen in Formen, in welche Materialteile eingepasst werden sollen.

Die vorliegende Erfindung erlaubt es einem Bediener, in einfacher Weise in einer beliebig vorgebbaren Horizontalebene verlaufende Raumpunkte bzw. Linien auf einer Oberfläche einer Konstruktion zu vermessen oder zu projizieren, ohne dass das Konstruktionsvermessungsgerät selbst notwendigerweise in Höhe der gewünschten Horizontalebene aufgestellt und manuell horizontal ausgerichtet werden muss.

Das vorangehend beschriebene erfindungsgemässe Konstruktionsvermessungsgerät und erfindungsgemässe Verfahren zum Vermessen und Markieren von Raumpunkten in einer diesen Raumpunkten gemeinsamen Horizontalebene einer Konstruktion sind Spezialausführungen für entsprechende Systeme und Verfahren für eine Projektion von Mustern auf eine definierte Oberfläche bzw. Projektionsfläche mit Hilfe eines, insbesondere sichtbaren, (Laser-)Messstrahls bzw. Projektionsstrahls.

Die vorliegende Erfindung löst eine Spezialaufgabe im Rahmen einer allgemeineren technischen Aufgabe, nämlich der Projektion eines beliebigen Musters auf eine definierte Fläche als Projektionsfläche mithilfe eines Projektions- bzw. Messsystems, welches technisch analog zu einem erfindungsgemässen Konstruktionsvermessungsgerät mit den Merkmalen des Oberbegriffs von Anspruch 1 ausgestattet ist, derart, dass eine Verzerrung des Musters durch schräg verlaufende oder nicht ebene Projektionsflächen bzw. Wände kompensiert werden. In der vorangehend erfindungsgemäss gelösten Spezialaufgabe handelt es sich bei dem zu erzeugenden Muster um eine horizontal verlaufende Linie.

Für eine Lösung der allgemeineren Aufgabenstellung kann das Muster als Datensatz auf einer Auswerte- und Steuereinheit ("Control Unit", CU) verwaltet werden, z.B. in Form einer Liste von zwei- oder dreidimensionalen Koordinaten. Damit das Muster auf der Projektionsfläche geometrisch richtig dargestellt werden kann, wird eine Ausrichtung des Messstrahls auf die Fläche und die Orientierung des Musters bezogen auf die Messung vollzogen. Dazu wird mindestens eine Vermessung eines oder mehrerer Raumpunkte auf der Projektionsfläche durchgeführt. Dabei ist es unerheblich, ob für das Muster die Ausgangsdaten zweidimensional unorientiert (affine Ebene) oder dreidimensional orientiert (kartesischer Raum) vorliegen.

Bei einem vorliegenden zweidimensionalen Muster ist die Projektionsfläche zwingend eben; im dreidimensionalen Fall muss die Projektionsfläche keiner vordefinierten Geometrie folgen, lediglich dürfen die dreidimensionalen Daten des Musters keinen räumlichen Abstand (innerhalb der angestrebten Messgenauigkeit) zu der Geometrie der Fläche haben.

Im Fall zweidimensionaler Ausgangsdaten des Musters ist die Projektionsfläche zwingend eben; im Fall dreidimensionaler Muster-Ausgangsdaten muss die Projektionsfläche keiner vordefinierten Geometrie entsprechen. Die dreidimensionalen Daten des Musters sollten vorteilhaft lediglich, innerhalb der angestrebten Mess- bzw. Projektionsgenauigkeit, keinen räumlichen Abstand zu den Daten von Raumpunkten entsprechend der Geometrie der Projektionsfläche aufweisen.

Bei der Ausrichtung des Laserstrahls bzw. Messstrahls der Anzieleinheit sind die durchzuführenden Schritte abhängig von der Geometrie sowohl des Musters als auch der Projektionsfläche sowie von deren relativem geometrischem Bezug.
- Im Fall eines zweidimensionalen Musters und einer orthogonal oder parallel zu einer örtlichen Gravitations-Lotlinie ausgerichteten ebenen Fläche ist eine Messung von mindestens zwei (Raum-)Punkten auf der ebenen Fläche ausreichend. Sollte die Fläche zudem orthogonal zum Messstrahl ausgerichtet sein, ist sogar die Messung nur eines einzigen Raumpunkts ausreichend.
- Andernfalls sind mindestens drei (Raum-)Punkte auf der Fläche zu messen, die nicht auf einer gemeinsamen Raumgeraden liegen. Falls das Muster dreidimensional vorliegt, ist es im Allgemeinen erforderlich, dass diese drei anzumessenden (Raum-)Punkte Bestandteile der Geometrie des Musters sind bzw. dieser entsprechen.
- Im Fall einer Vermessung von mehr als der für die jeweilige geometrische Situation minimal erforderlichen Anzahl (Redundanz) von (Raum-)Punkten kann das Projektions- bzw. Messsystem durch Ausgleichsrechnung die Genauigkeit der Messung kontrollieren bzw. verbessern.

Die durchzuführenden Schritte bei der Orientierung bzw. Ausrichtung des Musters auf der Fläche bezogen auf die Messung sind ebenfalls abhängig von der Geometrie sowohl des Musters als auch der Projektionsfläche sowie von deren relativem geometrischem Bezug. Die Punkte im Muster, die mit gemessenen (Raum-)Punkten koinzidieren, werden dabei im Folgenden als "Fixpunkte" bezeichnet.
- Im Fall zweidimensionaler Muster ist es vorteilhaft, aber nicht erforderlich, wenn ein auf der Fläche zuvor zur Ausrichtung des Laserstrahls bzw. Messstrahls der Anzieleinheit angemessener (Raum-)Punkt bereits ein Fixpunkt ist bzw. diesem entspricht. Dann reicht es aus, in die Kontrolleinheit einzugeben, welcher Punkt des Musters dem zuvor angemessenen (Raum-)Punkt entspricht und damit einen Fixpunkt darstellt, um die Orientierung der Lage des Musters vorzunehmen. Im allgemeineren Fall, dass ein bereits vermessener Punkt nicht einem Musterpunkt entspricht, ein (Raum-)Punkt neu vermessen, dieser in einen geometrischen Bezug zu Punkten des Musters gebracht, indem das Muster in einer Überlagerungsdarstellung auf einem

Display der Kontrolleinheit verschoben wird. Dazu wird beispielsweise mittels Angabe von Versatzwerten oder durch grafische Visualisierung und Verschiebung mittels Cursor-Tasten im Display der Kontrolleinheit eine Koinzidenz von angemessenen (Raum-)Punkten und Musterpunkten hergestellt ("translatorische Korrektur" oder "Shift"). Gegebenenfalls ist die Darstellung des Musters noch um einen (ersten) Fixpunkt zu drehen, was beispielsweise durch Eingabe eines Drehwinkels oder Koinzidenzherstellung für einen zweiten Punkt erfolgen kann ("rotatorische Korrektur"). Diese Schritte werden anhand der Figuren und der zugehörigen Beschreibung weiter erläutert.
- Im Fall zweidimensionaler Muster ist es auch vorteilhaft, wenn mindestens zwei zuvor zur Ausrichtung des Laserstrahls bzw. Messstrahls der Anzieleinheit angemessene (Raum)Punkte eine Linie bilden, die mit einer Linie von (begrenzenden) Musterpunkten in Bezug gebracht werden kann, indem das Muster beispielsweise in einer Überlagerungsdarstellung auf einem Display der Kontrolleinheit verschoben wird. Dazu wird beispielsweise mittels Angabe von Versatzwerten oder durch grafische Visualisierung und Verschiebung mittels Cursor-Tasten im Display der Kontrolleinheit eine Koinzidenz von angemessenen (Raum-)Punkten und Musterpunkten hergestellt ("translatorische Korrektur" oder "Shift"). Gegebenenfalls ist die Darstellung des Musters noch um einen (ersten) Fixpunkt zu drehen, was beispielsweise durch Eingabe eines Drehwinkels oder Koinzidenzherstellung für einen zweiten Punkt erfolgen kann.
- Im allgemeinen Fall sind drei übereinstimmende vermessene (Raum-)Punkte und Musterpunkte erforderlich, um ein beliebiges Muster auf einer beliebigen (Projektions-)Fläche zu orientieren bzw. auszurichten, zur Erzeugung von drei Fixpunkten, gegebenenfalls unter Kombination translatorischer und rotatorischer Korrekturen wie vorangehend beschrieben.

Nach erfolgter Ausrichtung des Laserstrahls bzw. Messstrahls der Anzieleinheit und Orientierung des Musters kann jeder beliebige Punkt des Musters gemäss Bedienereingabe automatisch lagegetreu auf die Projektionsfläche projiziert werden. Dieses kann durch tastatur-, joystick- oder spracheingabegeführte Übermittlung von Befehlen an die Kontrolleinheit erfolgen, oder auch durch Aufrufen einer automatisch ablaufenden sequentiellen, punktweisen Projektionsfunktionalität.

Das erfindungsgemässe Konstruktionsvermessungsgerät als isohöhenlinienprojizierendes System und das erfindungsgemässe Verfahren zum Vermessen und Markieren von Raumpunkten in einer diesen Raumpunkten gemeinsamen Horizontalebene einer Konstruktion werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen illustrieren
- Figur 1: ein erfindungsgemässes Konstruktionsvermessungsgerät und ein damit ausführbares Verfahren zum Vermessen und Markieren von Raumpunkten in einer diesen Raumpunkten gemeinsamen Horizontalebene;
- Figur 2: eine mögliche Ausführungsform eines erfindungsgemässen Konstruktionsvermessungsgeräts;
- Figur 3: eine technische Funktionalität und Verfahrensschritte zur Lösung einer allgemeineren technischen Aufgabe, nämlich der Projektion eines Musters, im speziellen Fall eines Gittermusters, auf eine Projektionsfläche derart, dass eine Verzerrung des Musters durch schräg verlaufende oder nicht ebene Projektionsflächen bzw. Wände kompensiert werden;
- Figur 4: in einer Abwandlung der Situation gemäss der Figuren 3a bis 3e, bei der ein zweidimensionales Punktmuster auf eine runde Wand, genauer auf eine zylinderförmige Projektionsfläche projiziert werden soll;
- Figur 5: eine Abwandlung der vorliegenden Erfindung mit einer Oberflächenkontur-Kontrollfunktionalität.

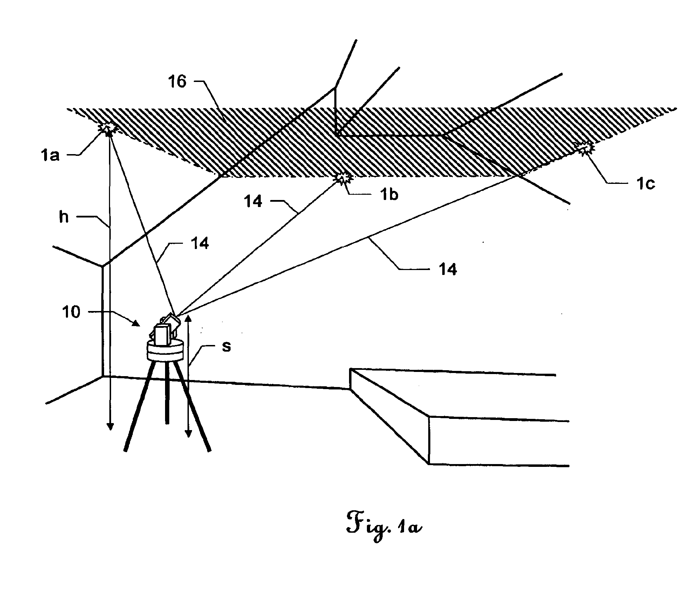

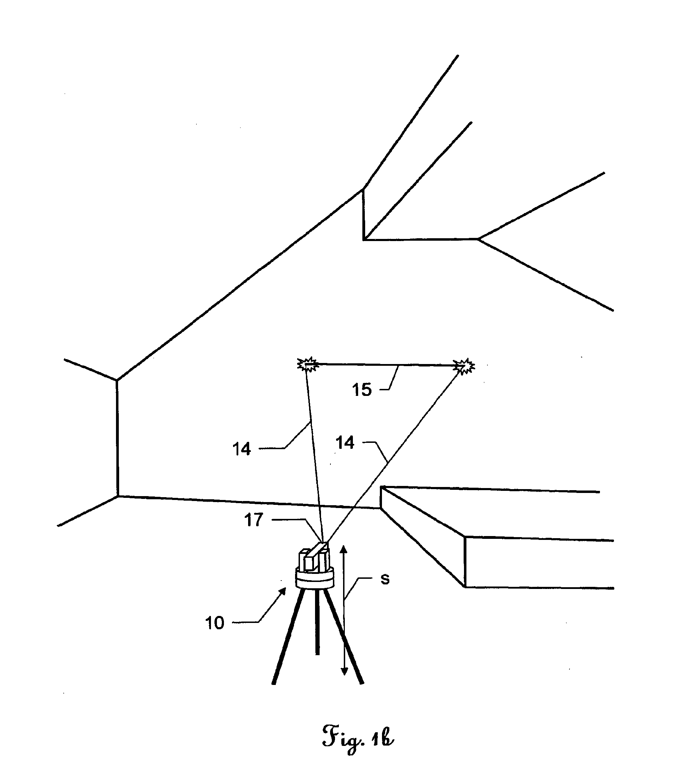

Figur 1 illustriert ein erfindungsgemässes Konstruktionsvermessungsgerät 10 und ein damit ausführbares Verfahren zum Vermessen und Markieren von Raumpunkten 1a, 1b, 1c entlang einer Linie 15 in einer diesen Raumpunkten gemeinsamen Horizontalebene 16 einer Konstruktion, insbesondere eines Gebäudes.

Das Konstruktionsvermessungsgerät 10 umfasst eine in diesem Beispiel als ein dreibeiniges Stativ ausgebildete Basis 11 mit einem darauf drehbar gelagerten Oberteil 12. Eine am Oberteil 12 schwenkbar gelagerte Anzieleinheit 13 ist mit einer zu einer Emission eines Laserstrahls 14, ausgehend von einem Lichtausgangspunkt 17 in einer Standhöhe s, ausgebildeten Laserquelle und einem Laserlicht-Detektor ausgestattet und stellt damit eine Distanzmessfunktionalität bereit.

Die Anzieleinheit kann dabei derart ausgebildet sein, dass der von der Laserquelle emittierbare Laserstrahl als Messund Markierlaserstrahl dient und anhand an der Objekt-Oberfläche reflektierter Anteile des Laserstrahls, die durch den Laserlicht-Detektor empfangen werden, die Distanz zu dem mit dem Laserstrahl angezielten Raumpunkt der Objekt-Oberfläche durch die Auswerte- und Steuereinheit ermittelbar ist.

Alternativ kann jedoch der Laserstrahl auch mehrere - z.B. auch von unterschiedlichen Quellen emittierte - Anteile aufweisen, insbesondere einen Anteil zur Verwendung als Markierlaserstrahl und einen Anteil zur Verwendung als Messlaserstrahl, der parallel oder koaxial zum Markierlaserstrahl ausgesendet wird. Die Anteile können dabei beispielsweise eine unterschiedliche Wellenlänge aufweisen, beispielsweise eine Wellenlänge im Bereich des sichtbaren Lichts für den Markierlaserstrahl und eine Wellenlänge im Bereich des IR- oder NIR-Lichts für den Messlaserstrahl. D.h., dass die Anzieleinheit auch derart ausgebildet sein kann, dass die Laserquelle zwei Teillaserquellen aufweist, die separat zur Aussendung eines ersten Anteils des Laserstrahls als Markierlaserstrahl im sichtbaren Wellenlängenbereich bzw. eines - koaxial oder geringfügig parallel versetzt zum Markierlaserstrahl verlaufenden - zweiten Anteils des Laserstrahls als Messlaserstrahl im nahen infraroten Wellenlängenbereich ausgebildet sind.

Das Konstruktionsvermessungsgerät 10 umfasst des Weiteren eine nicht dargestellte Auswerte- und Steuereinheit, wobei - ebenfalls nicht dargestellt - ein erster und ein zweiter Drehantrieb das Oberteil 12 bzw. die Anzieleinheit 13 antreibbar bzw. in einem Azimut- und einem Elevationswinkel ausrichtbar machen. Die räumliche Ausrichtung der Anzieleinheit 13 gegenüber der Basis 11 ist über zwei Winkelmesser erfassbar. Die Winkelmesser können beispielsweise als Winkelsensoren und Neigungssensoren ausgebildet sein. Die Auswerte- und Steuereinheit ist mit der Laserquelle, dem Laserlicht-Detektor sowie den Winkelmessern verbunden, um eine erfasste Distanz und erfasste Azimut- und Elevationswinkel einer entsprechenden Ausrichtung der Anzieleinheit 13 zuzuordnen und somit Koordinaten für Raumpunkte zu bestimmen.

Insbesondere ist zusätzlich ein zwei-achsiger Neigungssensor oder zwei ein-achsige Neigungssensoren vorgesehen, mit denen eine Neigung der Basis 11 gegenüber einer Horizontalebene, bezogen auf den Schwerefeld-Vektor der Erde, bestimmt werden kann. Zum einen wird dadurch die äussere Referenz der Horizontalität festgelegt und zum anderen wird die aktuelle Ausrichtung der Basis 11 (und somit auch der Anzieleinheit 13 und des gesamten Geräts) gegenüber dieser äusseren - auf den Schwerefeld-Vektor der Erde bezogenen - Horizontalen bestimmt. Im Allgemeinen ist mit einer solchen Zusatzausstattung mit Horizontierungs-oder Neigungssensoren eine ansonsten mühsam manuell zu erfolgende hochgenau horizontal ausgerichtete Aufstellung der Basis 11 bezüglich des Schwerefeld-Vektors der Erde nicht erforderlich, sondern kann rechnerisch durch die Auswerte- und Steuereinheit berücksichtigt werden (Stehachsfehlerkompensation).

Erfindungsgemäss weist das Konstruktionsvermessungsgerät 10 eine Horizontalebenen-Indikationsfunktionalität bzw. Horizontallinien-Projektionsfunktionalität auf, welche nach Auslösung zumindest teilweise automatisch abläuft. Ausgehend von einem bekannten, definierten ersten Raumpunkt 1a in der vordefinierten Horizontalebene 16, bzw. durch dessen räumliche Anordnung eine Horizontalebene 16 vordefiniert wird, und dessen Raumkoordinaten in einer ersten horizontalen Ausrichtung angemessen und gespeichert werden, wird die Anzieleinheit 13 in eine beliebige zweite horizontale Ausrichtung gefahren. Dieses kann direkt gesteuert durch einen Bediener oder in automatisch vorgegebenen Mess- bzw. Projektionsintervallen folgend geschehen. Dabei können sequentiell einzustellende Azimutwinkel entsprechend unterschiedlicher horizontaler Ausrichtung der Anzieleinheit 13 auf ein internes Koordinatensystem des Konstruktionsvermessungsgeräts 10 oder auf vorgegebene Abstände zwischen benachbarten zu projizierenden Raumpunkten 1a, 1b, 1c auf der Projektionsfläche 16 bezogen sein.

Mithilfe der Horizontallinien-Projektionsfunktionalität wird die Anzieleinheit 13 automatisch auf einen zweiten Raumpunkt 1b ausgerichtet, welcher in der zweiten horizontalen Ausrichtung und in derselben Horizontalebene wie der erste Raumpunkt 1a angeordnet ist. Dazu wird der Elevationswinkel für die Aussendung des Laserstrahls 14 von der Anzieleinheit 13 automatisch zur Anvisierung des zweiten Raumpunkts 1b an die durch die Lage des ersten Raumpunkts 1a definierte Horizontalebenenhöhe h angepasst und damit entlang einer Linie auf der Projektionsfläche in der vordefinierten Horizontalebene 16 geführt.

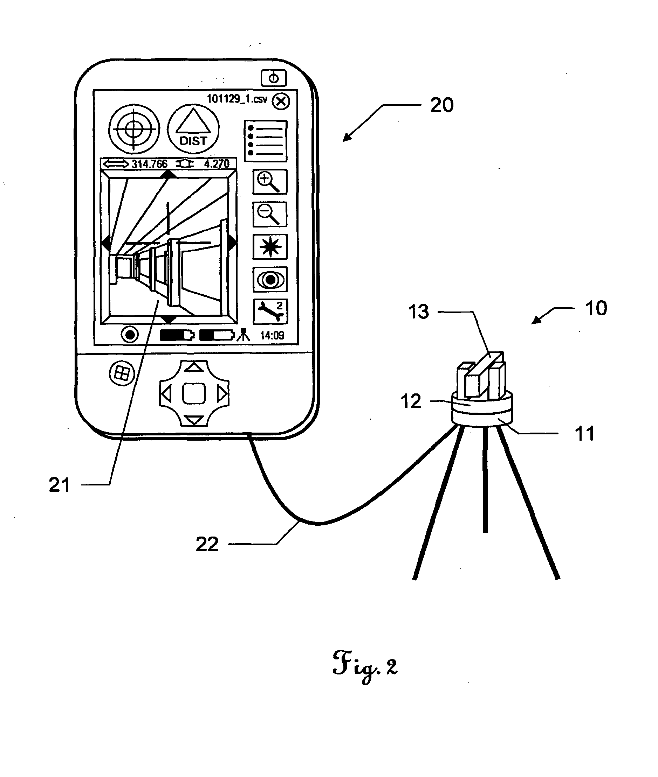

Figur 2 zeigt eine mögliche Ausführungsform eines erfindungsgemässen Konstruktionsvermessungsgeräts 10. Das System 10 umfasst eine Kontrolleinheit 20 als Auswerte- und Steuereinheit zur Verarbeitung und Anzeige der Daten. Die Kontrolleinheit 20 und ein Laserlicht-Detektor bzw. Sensor kommunizieren miteinander. Die Kontrolleinheit 20 und der Laserlicht-Detektor bzw. Sensor können physisch getrennt und mittels drahtloser oder kabelgeführter Kommunikationsverbindungen 22 miteinander verbunden sein oder als eine Einheit bereitgestellt sein. Zur Ausrichtung des Laserstrahls 14 auf zu vermessende oder zu projizierende Raumpunkte kann mindestens der Laserstrahl 14 als ein Messstrahl selbst dienen. Zur Unterstützung eines Bedieners für die Anvisierung eines Raumpunkts kann das Konstruktionsvermessungsgerät 10 zusätzlich mit einer optischen Anzielhilfe, z.B. einem Teleskop, oder einer optisch-elektronischen Anzielhilfe, z.B. einer Überblickskamera oder einer so genannten "Viewfinder-Camera", ausgestattet sein, deren Bild auf einem Display 21 Kontrolleinheit 20 dargestellt werden kann.

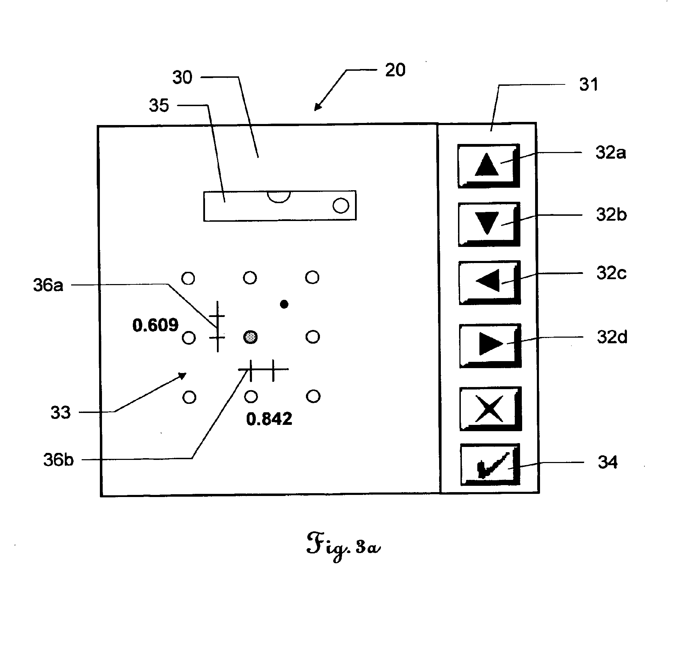

Die Figuren 3a bis 3e illustrieren eine technische Funktionalität und Verfahrensschritte zur Lösung einer allgemeineren technischen Aufgabe, nämlich der Projektion eines Musters, im speziellen Fall eines Gittermusters 33, auf eine Projektionsfläche derart, dass eine Verzerrung des Musters durch schräg verlaufende oder nicht ebene Projektionsflächen bzw. Wände kompensiert werden.

Dazu wird das Gittermuster 33 als ein Datensatz auf einer Auswerte- und Steuereinheit bzw. einer Kontrolleinheit 20 verwaltet, in Form einer Liste von zwei- oder dreidimensionalen Koordinaten. Damit das Gittermuster 33 auf der Projektionsfläche geometrisch richtig dargestellt werden kann, ist üblicherweise zu Beginn eine Ausrichtung des Laserstrahls bzw. Messstrahls der Anzieleinheit auf die Projektionsfläche erforderlich.

Die Figuren 3a bis 3e beziehen sich auf die Orientierung bzw. Ausrichtung des Musters 33 auf der Projektionsfläche bezogen auf eine vorangehend durchgeführte Vermessung von (Raum-)Punkten auf der Fläche, wie sie entsprechend der vorangehenden Beschreibung durchgeführt werden kann.

Figur 3a illustriert eine Steuer- und Auswerteinheit bzw. Kontrolleinheit 20 mit einem Display 30 und einer Kommandoleiste 31 mit Pfeiltasten 32a bis 32d zur Bewegung der Darstellung eines Gittermusters 33 auf dem Display 30. Eine translatorische Bewegung bzw. Verschiebung des Gittermusters 33 auf dem Display wird erzeugt durch Betätigung von Pfeiltasten 32a bis 32d. Damit ist eine Anpassung der Darstellung der Punkte des Gittermusters 33 an eine vorgegebene, beispielsweise zuvor erzeugte Linie zwischen vermessenen (Raum-)Punkten der Projektionsfläche in paralleler und/oder orthogonaler Ausrichtung zu dieser Linie möglich. Eine Funktionalität zur Ausführung einer Drehrichtung oder Bestimmung einer horizontalen Ausrichtung der Darstellung des Gittermusters 33 kann beispielsweise durch eine symbolische Darstellung eines Neigungssensors 35, z.B. als eine Wasserwaage, dargestellt sein, vorzugsweise verbunden mit der Möglichkeit zur Eingabe von durch einen Systembediener zu definierenden Drehungen der Darstellung der Gittermusters 33 auf dem Display 30. Figur 3a illustriert ferner beispielhaft eine numerische Anzeige von Abständen 36a, 36b zwischen ausgewählten dargestellten Punkten oder Linien, was vorzugsweise in Echtzeit erfolgt.

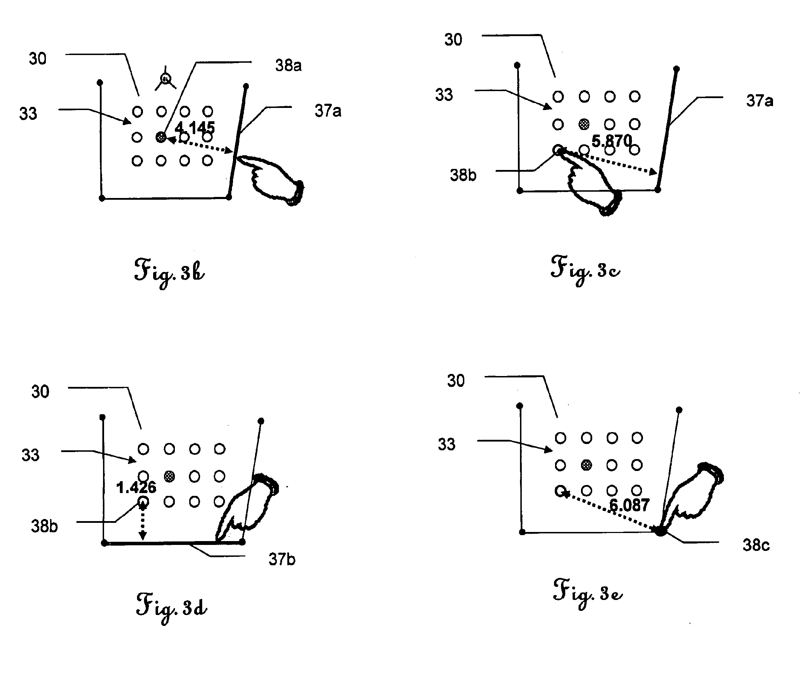

Für den Fall eines zweidimensionalen Gittermusters 33 illustriert Figur 3b, wie in einem Fall, bei dem ein zuvor vermessener (Raum-)Punkt auf einer Projektionsoberfläche nicht einem Gittermusterpunkt entspricht, aber eine zuvor vermessene Raumpunkt-Referenzlinie 37a bestimmt worden ist. Ein Bediener selektiert die Referenzlinie 37a, und einen Gittermusterpunkt 38a, und gemäss der Funktionalität des Systems wird dem Bediener ein kürzester, d.h. orthogonal zu der Referenzlinie 37a bestimmter Abstand des Gitterpunkts 38a angezeigt.

Gemäss Figur 3c kann der Bediener beispielsweise einen weiteren Gittermusterpunkt 38b auswählen, für den ihm dann der kürzeste, d.h. ebenfalls orthogonal zu der Referenzlinie 37a bestimmte Abstand, angezeigt wird.

Wie in Figur 3d illustriert, kann der Bediener eine andere Referenzlinie 37b auswählen, zu der ihm beispielsweise vom zuletzt ausgewählten Gittermusterpunkt 38b ausgehend, der kürzeste, d.h. orthogonal zu der Referenzlinie 37b bestimmte Abstand, angezeigt wird.

Gemäss Figur 3e kann der Bediener einen weiteren Gitterpunkt 38c bzw. vermessenen (Raum-)Punkt als einen weiteren Referenzpunkt auswählen und den Abstand zu einem vorher selektierten Gittermusterpunkt anzeigen lassen.

Typischerweise wird durch Betätigung einer Bestätigungstaste 34 auf der Kommandoleiste 31 eine Akzeptanz der dargestellten Vermessungsdaten bestätigt, und nach Bestätigung der Übereinstimmung einer ausreichenden Anzahl von vermessenen (Raum-)Punkten bzw. Referenzpunkten mit Gittermusterpunkten kann der Bediener das Gittermuster bewegen und an die gewünschten Abmessungen anpassen und im Übereinstimmungsfall eine realitätskonforme Projektion des Gittermusters 30 initialisieren.

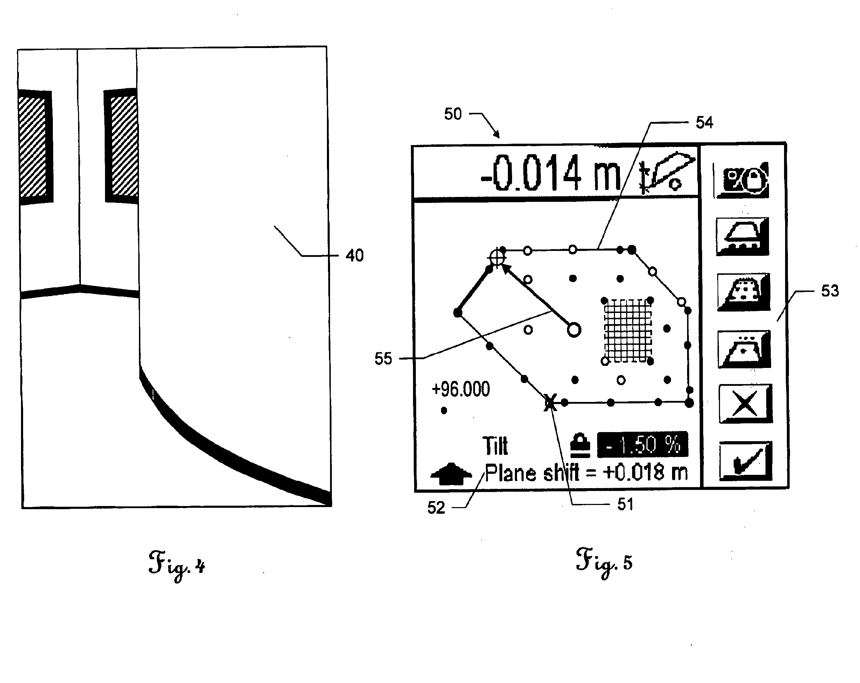

In einer Abwandlung der Situation gemäss der Figuren 3a bis 3e ist ein zweidimensionales Punktmuster vorgegeben, das auf eine runde Wand, genauer auf eine zylinderförmige Projektionsfläche 40, wie in Figur 4 dargestellt, projiziert werden soll.

Grundsätzlich ist es möglich, eine geometrisch reguläre - d.h. eine durch eine geschlossene mathematische Funktion darstellbare - Oberfläche zu parametrisieren, ein vorgegebenes zweidimensionales Muster auf eine dreidimensionale Geometrie zu transformieren und dann punktweise zu projizieren.

Nachfolgend wird ein Verfahren beschrieben, mit dem unter Benutzung eines erfindungsgemässen referenzlinienprojizierenden Systems bei dessen anwendungserforderlicher funktionaler Ausstattung das Muster in Echtzeit und ohne Transformation projiziert werden kann.

Dazu werden die affinen Eigenschaften des Musters, d.h. die Abstände im Muster benachbarter Punkte, verwendet. Ein erster zu projizierender Punkt wird als ein Fixpunkt angezielt. Ein benachbarter Musterpunkt wird als ein nächster bzw. zweiter Fixpunkt ausgewählt, wobei mit dem Laserlichtdetektor bzw. Sensor kontinuierlich vermessen und die Anzielrichtung iterativ nachgeführt wird, bis die real gemessenen Abstände der vorgesehenen beiden Fixpunkte mit den vorbestimmten Werten übereinstimmen. Zur Beschleunigung der Iteration kann der erste Schritt der Iteration berechnet werden unter der vereinfachenden Annahme, dass der zweite Fixpunkt auf einer fiktiven Ebene durch den ersten Fixpunkt und orthogonal zur Richtung der Ziellinie des Lasers liegt. Auf diese Weise wird in einem einzigen Arbeitsschritt der Laserlichtdetektor bzw. Sensor bezüglich eines auf zunächst zwei Musterpunkte reduzierten Musters ausgerichtet und orientiert. Anders ausgedrückt in mathematischer Form bedeutet dieses, dass eine fiktive Ebene angenommen wird, die durch diese beiden Punkte und den Schnitt mit der tatsächlichen realen Oberfläche definiert ist.

Diese Vorgehensweise wird von Punkt zu Punkt fortgesetzt, und entsprechend definieren der zweite und dritte Punkt in Verbindung mit dem Schnitt mit der tatsächlichen realen Oberfläche die nächste fiktive Ebene. Somit wird kontinuierlich eine unebene Oberfläche durch eine Abfolge von Ebenen angenähert und zeitgleich die Projektion des Musters vorgenommen. Das Verfahren ist umso genauer und schneller, je mehr die Kontur der tatsächlichen zu projizierenden Fläche einer ebenen Geometrie folgt.

Die beschriebene Vorgehensweise ist behaftet mit einem Risiko einer sowohl zufälligen als auch einer systematischen Fehlerfortpflanzung. Zufällige Fehler können auftreten, weil bei der sukzessiven punktweisen Iteration jedes Mal die Messungenauigkeit des Systems abgebildet wird, wohingegen diese Messungenauigkeit bei der Projektion der gespeicherten Daten eines (Punkt-)Musters auf eine vorgegebene Fläche nur bei der Ausrichtung der Anzieleinheit auf den ersten zu projizierenden Punkt eine Rolle spielt. Systematische Fehler können auftreten, wenn die reale Fläche an unterschiedlichen Stellen unterschiedliche Krümmungen aufweist. Die Iteration an einen und denselben zu projizierenden (Raum-)Punkt kann dann über unterschiedliche Iterationswege zu unterschiedlich angeordneten realen Punkten führen. Beeinträchtigend kann auch wirken, wenn die Funktionalität es nicht zulässt, Zwischenpunkte in einem Muster zunächst auszulassen bzw. zu überspringen und später nachzumessen.

Um beide beschriebenen Arten der Fehlerfortpflanzung in ihren Auswirkungen zu minimieren, ist es vorteilhaft, einen bereits einmal auf der Ebene projizierten Punkt als mit seinen dreidimensionalen Koordinaten festzulegen bzw. als Fixpunkt zu speichern und bei einem erneuten Projektionsvorgang diesen gemäss seinen gespeicherten Koordinaten anzufahren, anstatt einen solchen Punkt nochmals iterativ anzufahren. Alternativ oder ergänzend für die Projektion weiterer Musterpunkte kann auch der vorbestimmte Abstand jedes dieser weiteren Musterpunkte zu einem ersten definierten Fixpunkt für die Berechnung der Projektionsdaten verwendet werden, was aber inbesondere bei unregelmässig gekrümmten Oberflächen mit einem Risiko von Verzerrungen der Projektion verbunden ist.

Ein wesentlicher Vorteil dieser beschriebenen Vorgehensweise besteht darin, dass die Projektion bereits nach Festlegung eines ersten Fixpunkts gestartet werden kann, und dass die Orientierung bzw. Anpassung des Musters an die (Projektions-)Fläche für jeden Musterpunkt sozusagen in Echtzeit erfolgen kann, indem sequentiell zu projizierende Punkte nach Bedarf sowohl zur Ausrichtung der Anzieleinheit als auch zur Orientierung bzw. Anpassung des Musters bezüglich der (Projektions-)Fläche herangezogen werden können.

Figur 5 illustriert eine Abwandlung der vorliegenden Erfindung mit einer Oberflächenkontur-KontrollFunktionalität. Voraussetzung für den Einsatz der Oberflächenkontur-Kontrollfunktionalität ist die Vorgabe einer Kontur einer Referenzoberfläche. Vorzugsweise weist die Referenzoberfläche eine mathematisch beschreibbare Kontur, beispielsweise sphärisch gekrümmt oder eben, auf.

Die erforderliche Genauigkeit für eine Anpassung einer realen Oberflächenkontur an eine vorgegebene Kontur einer Referenzoberfläche ist anwendungsbedingt. Bei Anwendungen mit Bodenaushub oder -aufschüttungen ist die erforderliche Genauigkeit typischerweise relativ gering, für Ebenheitskontrollen bzw. -korrekturen hingegen sind Toleranzen in der Grössenordnung von Millimetern typisch.

In einer beispielhaften konkreten Anwendung soll beispielsweise eine Bodengrube mit Kies aufgeschüttet und ausgefüllt werden mit einer vorgegebenen Ausschüttungshöhe. Abhängig von der der Kontur der Grube kann die Bestimmung des erforderlichen Volumens von Aufschüttungsmaterial schwierig sein.

Gemäss einer anderen konkreten Anwendung ist eine Fahrstrasse mit einer Fahrbahnneigung von 2 % geplant, wobei die tatsächliche Neigung der vorhandenen Oberfläche aufgrund von Unebenheiten von dem geplanten Profil abweicht. Die zuständigen Personen vor Ort müssen folglich die Umsetzung des geplanten Bauvorhabens an die reale Situation anpassen.

Der bekannte Stand der Technik erlaubt es einem Bediener nicht, die Geometrie der Referenzoberfläche mit einfachen Mitteln zu variieren und entsprechende potentielle Auswirkungen auf die Realsituation zu testen. Stattdessen muss der Bediener typischerweise entsprechend sukzessive Messungen und/oder Berechnungen für eine Bestimmung oder Anpassung einer Referenzoberfläche an die reale Topographie durchführen.

Zur Anwendung der anhand von Figur 5 illustrierten Oberflächenkontur-Kontrollfunktionalität müssen vorangehend, als eine Voraussetzung, eine Begrenzungslinie 54 und einige reale (Raum-)Punkte zur Bestimmung der realen Geometrie der zu bearbeitenden Oberfläche vermessen worden sein. Nach Programmaufruf wird eine graphische Repräsentation der Oberflächenkontur-Kontrollfunktionalität auf einem Display 50 einer Kontrolleinheit angezeigt. Im Display 50 werden die vorgegebene Referenzoberfläche und die vermessenen Punkte der realen Oberfläche einander überlagert. Der Bediener kann einen beliebigen vermessenen Raumpunkt 51 anwählen, von dem aus ihm der Abstand 52 zur Referenzoberfläche angezeigt wird. Mittels entsprechender Eingabe-Kommandos 53, beispielsweise durch graphische Aktivierung von Steuerfeldern, kann die Geometrie der Referenzoberfläche verändert, beispielsweise eine ebene Referenzoberfläche angehoben oder gesenkt oder in ihrer Neigung verändert werden. Beispielsweise kann durch einen Pfeil 55 die Richtung (Gradient) einer Neigung der Referenzoberfläche angezeigt werden. Beispielsweise kann der Bediener nach Auswahl ("Anklicken") des Pfeils 55 zur Neigungsrichtungsanzeige diesen bewegen und in eine beliebige andere Richtung-ausrichten, um so die Kontur der Referenzoberfläche zu verändern.

Unterschiede zwischen der vermessenen Geometrie der realen Oberfläche, beispielsweise hinsichtlich Entfernung, Neigung, zur Angleichung an die Referenzoberfläche erforderlicher Materialvolumina etc. werden an der geänderten Geometrie der Referenzoberfläche in Echtzeit angezeigt.

Diese Funktionalität ermöglicht eine Anpassung zwischen einer realen Oberfläche und einer Referenzoberfläche durch einen einzigen Bediener. Der erforderliche Aufwand für eine Anpassung der geplanten Geometrie einer Konstruktion in ihrer Umsetzung bezüglich einer realen Oberflächengeometrie wird damit deutlich reduziert.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Konstruktionsvermessungsgerät (10) zum Vermessen und Markieren von Raumpunkten (1a, 1b, 1c) im Rahmen von Bau und/oder Ausbau - insbesondere Innenausbau - von Gebäuden mit
• einer Basis (11),
• einem an der Basis (11) um eine Drehachse drehbar gelagerten Oberteil (12),
• einer am Oberteil (12) um eine Schwenkachse schwenkbar gelagerten, Distanzmessfunktionalität bereitstellenden Anzieleinheit (13) mit einer zur Emission eines Laserstrahls (14) ausgebildeten Laserquelle und einem Laserlicht-Detektor und
• einer Auswerte- und Steuereinheit (20),
wobei
• ein erster und ein zweiter Drehantrieb das Oberteil (12) bzw. die Anzieleinheit (13) antreib- und ausrichtbar machen,
• eine räumliche Ausrichtung der Anzieleinheit gegenüber der Basis (11) über zwei Winkelmesser erfassbar ist und
• die Auswerte- und Steuereinheit mit der Laserquelle, dem Laserlicht-Detektor sowie den Winkelmessern verbunden ist, um eine erfasste Distanz einer entsprechenden Ausrichtung zuzuordnen und somit Koordinaten für Raumpunkte zu bestimmen,
**dadurch gekennzeichnet, dass**
das Konstruktionsvermessungsgerät (10) eine nach Auslösung zumindest teilweise automatisch ablaufende Horizontallinien-Projektionsfunktionalität zum Vermessen und Markieren von Raumpunkten (1a, 1b, 1c) entlang einer in einer Horizontalebene (16) verlaufenden Horizontallinie (15) auf einer beliebig geformten Oberfläche aufweist, in deren Rahmen, ausgehend von einem bekannten, die Horizontalebene (16) definierenden ersten Raumpunkt (1a), nach Änderung der azimutalen Ausrichtung der Anzieleinheit (13) jeweils derart automatisch gesteuert durch die Auswerte- und Steuereinheit mittels des ersten und/oder des zweiten Drehantriebs die elevative Ausrichtung der Anzieleinheit (13) geändert wird, dass genau solche Raumpunkte (1b) mit dem Laserstrahl (14) angefahren und markiert werden, die - in der entsprechenden jeweiligen aktuellen azimutalen Ausrichtung - auf der Horizontallinie (15) liegen.

2. Konstruktionsvermessungsgerät (10) nach Anspruch 1, **dadurch gekennzeichnet, dass** die Horizontallinien-Projektionsfunktionalität so eingerichtet ist, daß zum reaktiv nach Änderung der azimutalen Ausrichtung - insbesondere fliegend beim Ändern der azimutalen Ausrichtung - erfolgenden Anpassen der elevativen Ausrichtung der Anzieleinheit (13) fortlaufend
• die räumliche Ausrichtung der Anzieleinheit gegenüber der Basis (11) über die zwei Winkelmesser und
• die Distanz zu aktuell anvisierten Raumpunkten auf der Oberfläche
erfasst werden, insbesondere mit einer Rate von mindestens 10Hz.

3. Konstruktionsvermessungsgerät (10) nach Anspruch 1 oder 2,
**dadurch gekennzeichnet, dass**
im Rahmen der Horizontallinien-Projektionsfunktionalität die azimutale Ausrichtung der Anzieleinheit (13) automatisch gesteuert durch die Auswerte- und Steuereinheit mittels des ersten und/oder des zweiten Drehantriebs fortlaufend innerhalb eines definierten azimutalen Winkelbereichs geändert wird, insbesondere. mit einer azimutalen Winkelgeschwindigkeit von mindestens 12° pro Sekunde, und dabei jeweils fortlaufend die elevative Ausrichtung der Anzieleinheit (13) derart automatisch fliegend - d.h. zeitlich parallel zum fortlaufenden Ändern der azimutalen Ausrichtung - angepasst wird, dass die Projektion des Laserstrahls (14) auf der Oberfläche stets entlang der Horizontallinie (15) geführt wird.

4. Konstruktionsvermessungsgerät (10) nach Anspruch 2 oder 3,
**dadurch gekennzeichnet, dass**
• das Konstruktionsvermessungsgerät so eingerichtet ist, daß die azimutale Ausrichtung der Anzieleinheit (13) automatisch fortlaufend innerhalb eines azimutalen Winkelbereichs von 360° geändert wird, insbesondere mit einer azimutalen Winkelgeschwindigkeit von mindestens 24° pro Sekunde, im Speziellen 36° pro Sekunde, oder
• die Horizontallinien-Projektionsfunktionalität derart ausgestattet ist, dass nach Vorgabe einer gewünschten Pfadlänge für die Horizontallinie auf der Oberfläche, ausgehend vom ersten Raumpunkt (1a), die azimutale Ausrichtung der Anzieleinheit (13) automatisch gesteuert durch die Auswerte- und Steuereinheit mittels des ersten und/oder des zweiten Drehantriebs solange fortlaufend geändert wird, bis mit der Projektion des Laserstrahls (14) entlang der Horizontallinie (15) auf der Oberfläche die gewünschte Pfadlänge abgefahren ist.

5. Konstruktionsvermessungsgerät (10) nach einem der Ansprüche 2 bis 4,
**dadurch gekennzeichnet, dass** das Konstruktionsvermessungsgerät so eingerichtet ist, daß die azimutale Ausrichtung der Anzieleinheit (13) automatisch derart innerhalb des bestimmten azimutalen Winkelbereichs fortlaufend geändert wird, sodass die Projektion des Laserstrahls (14) auf der Oberfläche wiederholt, d.h. in mehreren Durchgängen, entlang der Horizontallinie (15) geführt wird, und ausgehend von im Rahmen eines oder mehreren Initial-Durchgängen des Führens der Projektion des Laserstrahls entlang der Horizontallinie (15) gespeicherte Vermessungsdaten für auf der Horizontallinie (15) liegende Raumpunkte verwendet werden, um bei nachfolgenden Durchgängen das fliegende Anpassen der elevativen Ausrichtung der Anzieleinheit (13) beim Ändern der azimutalen Ausrichtung und somit auch das Führen entlang der Horizontallinie (15) optimiert wird, insbesondere sodass das Führens der Projektion des Laserstrahls entlang der Horizontallinie (15) dadurch mit höherer Geschwindigkeit und/oder präziser erfolgt.

6. Konstruktionsvermessungsgerät (10) nach einem der Ansprüche 2 bis 5,
**dadurch gekennzeichnet, dass**
im Rahmen der Horizontallinien-Projektionsfunktionalität zur Optimierung des fliegend zum Ändern der azimutalen Ausrichtung erfolgenden entsprechenden Anpassens der elevativen Ausrichtung der Anzieleinheit (13) ein mathematisches Modell zur Beschreibung der Form der Oberfläche herangezogen wird, insbesondere wobei die Oberfläche als ebene Fläche,
Zylindermantelfläche oder Kugeloberfläche angenommen wird, im Speziellen wobei das mathematische Modell in einem Speichermedium der Auswerte- und Steuereinheit abgelegt ist und/oder anhand von gespeicherten oder speziell dafür erfassten aus Messdaten bezüglich Distanz und Winkeln zu auf der Oberfläche liegenden Raumpunkten erstellt wird, insbesondere mittels einer Best-Fit-Methode.

7. Konstruktionsvermessungsgerät (10) nach einem der Ansprüche 1 bis 6,
**dadurch gekennzeichnet, dass**
die Anzieleinheit (13) derart ausgebildet ist,
• dass der von der Laserquelle emittierbare Laserstrahl (14) als Mess- und Markierlaserstrahl dient oder
• dass die Laserquelle zwei Teillaserquellen aufweist, die separat zur Aussendung eines ersten Anteils des Laserstrahls (14) als Markierlaserstrahl im sichtbaren Wellenlängenbereich bzw. eines - koaxial oder geringfügig parallel versetzt zum Markierlaserstrahl verlaufenden - zweiten Anteils des Laserstrahls (14) als Messlaserstrahl im nahen infraroten Wellenlängenbereich ausgebildet sind,
und anhand an der Objekt-Oberfläche (3, 3') reflektierter Anteile des Laserstrahls (14), die durch den Laserlicht-Detektor empfangen werden, die Distanz zu dem mit dem Laserstrahl (14) angezielten Raumpunkt der Objekt-Oberfläche (3, 3') durch die Auswerte- und Steuereinheit ermittelbar ist.

8. Konstruktionsvermessungsgerät (10) nach einem der Ansprüche 1 bis 7,
**dadurch gekennzeichnet, dass**
ein äusserer Bezug zur Horizontalität herstellbar ist durch
• Neigungssensormittel, die zur Bestimmung der Neigung gegenüber dem Erdschwerefeld-Vektor um zwei Achsen und zur Übermittlung deren Messdaten an die Auswerte- und Steuereinheit ausgebildet sind, insbesondere wobei die Neigungssensormittel in die Basis (11) integriert sind, und/oder
• Vorabeinmessung einer in bekannter äusserer Ausrichtung befindlichen Referenz, insbesondere zweier Endpunkte eines pendelnd aufgehängten Lotstabs bzw. Senklots oder einer als horizontal ausgerichtet angenommenen Referenzebene, und daraus erfolgende Ableitung der äusseren Horizontalität durch die Auswerte- und Steuereinheit.

9. Verfahren zum Vermessen und Markieren von Raumpunkten in einer gemeinsamen Horizontalebene (16) einer Konstruktion mittels eines Konstruktionsvermessungsgeräts (10) nach einem der Ansprüche 1 bis 8 mit den folgenden Schritten:
• Ausrichten der Anzieleinheit (13) und Aussendung des Laserstrahls (14) auf einen ersten Raumpunkt (1a);
• Anmessen des ersten Raumpunkts (1a) und Speichern seiner Raumkoordinaten;
• Ändern der azimutalen Ausrichtung der Anzieleinheit (13);
• nach Ändern der azimutalen Ausrichtung jeweils derart automatisch gesteuert durch die Auswerte- und Steuereinheit mittels des ersten und/oder des zweiten Drehantriebs erfolgendes Anpassen der elevativen Ausrichtung der Anzieleinheit (13), dass genau solche Raumpunkte (1b) mit dem Laserstrahl (14) angefahren und markiert werden, die - in der entsprechenden jeweiligen aktuellen azimutalen Ausrichtung - auf der Horizontallinie (15) liegen.

10. Verfahren nach Anspruch 9,
**dadurch gekennzeichnet, dass**
zum reaktiv nach dem Ändern der azimutalen Ausrichtung, insbesondere fliegend beim Ändern der azimutalen Ausrichtung, erfolgenden Anpassen der elevativen Ausrichtung der Anzieleinheit (13) fortlaufend
• die räumliche Ausrichtung der Anzieleinheit gegenüber der Basis (11) über die zwei Winkelmesser und
• die Distanz zu aktuell anvisierten Raumpunkten auf der Oberfläche
erfasst werden, insbesondere mit einer Rate von mindestens 10Hz.

11. Verfahren nach Anspruch 9 oder 10,
**dadurch gekennzeichnet, dass**
die azimutale Ausrichtung der Anzieleinheit (13) automatisch gesteuert durch die Auswerte- und Steuereinheit mittels des ersten und/oder des zweiten Drehantriebs fortlaufend innerhalb eines definierten azimutalen Winkelbereichs geändert wird, insbesondere mit einer azimutalen Winkelgeschwindigkeit von mindestens 12° pro Sekunde, und dabei jeweils fortlaufend die elevative Ausrichtung der Anzieleinheit (13) derart automatisch fliegend - d.h. zeitlich parallel zum fortlaufenden Ändern der azimutalen Ausrichtung - angepasst wird, dass die Projektion des Laserstrahls (14) auf der Oberfläche stets entlang der Horizontallinie (15) geführt wird.

12. Verfahren nach einem der Ansprüche 9 bis 11,
**dadurch gekennzeichnet, dass**
• die azimutale Ausrichtung der Anzieleinheit (13) automatisch fortlaufend innerhalb eines azimutalen Winkelbereichs von 360° geändert wird, insbesondere mit einer azimutalen Winkelgeschwindigkeit von mindestens 24° pro Sekunde, im Speziellen 36° pro Sekunde, oder
• nach Vorgabe einer gewünschten Pfadlänge für die Horizontallinie auf der Oberfläche, ausgehend vom ersten Raumpunkt (1a), die azimutale Ausrichtung der Anzieleinheit (13) automatisch gesteuert durch die Auswerte- und Steuereinheit mittels des ersten und/oder des zweiten Drehantriebs solange fortlaufend geändert wird, bis mit der Projektion des Laserstrahls (14) entlang der Horizontallinie (15) auf der Oberfläche die gewünschte Pfadlänge abgefahren ist.

13. Verfahren nach einem der Ansprüche 9 bis 12,
**dadurch gekennzeichnet, dass**
die azimutale Ausrichtung der Anzieleinheit (13) automatisch derart innerhalb des bestimmten azimutalen Winkelbereichs fortlaufend geändert wird, sodass die Projektion des Laserstrahls (14) auf der Oberfläche wiederholt, d.h. in mehreren Durchgängen, entlang der Horizontallinie (15) geführt wird, und ausgehend von im Rahmen eines oder mehreren Initial-Durchgängen des Führens der Projektion des Laserstrahls entlang der Horizontallinie (15) gespeicherte Vermessungsdaten für auf der Horizontallinie (15) liegende Raumpunkte verwendet werden, um bei nachfolgenden Durchgängen das fliegende Anpassen der elevativen Ausrichtung der Anzieleinheit (13) beim Ändern der azimutalen Ausrichtung und somit auch das Führen entlang der Horizontallinie (15) optimiert wird, insbesondere sodass das Führens der Projektion des Laserstrahls entlang der Horizontallinie (15) dadurch mit höherer Geschwindigkeit und/oder präziser erfolgt.

14. Verfahren nach einem der Ansprüche 9 bis 13,
**dadurch gekennzeichnet, dass**
zur Optimierung des fliegend zum Ändern der azimutalen Ausrichtung erfolgenden entsprechenden Anpassens der elevativen Ausrichtung der Anzieleinheit (13) ein mathematisches Modell zur Beschreibung der Form der Oberfläche herangezogen wird, insbesondere wobei die Oberfläche als ebene Fläche, Zylindermantelfläche oder Kugeloberfläche angenommen wird, im Speziellen wobei das mathematische Modell in einem Speichermedium der Auswerte- und Steuereinheit abgelegt ist und/oder anhand von gespeicherten oder speziell dafür erfassten aus Messdaten bezüglich Distanz und Winkeln zu auf der Oberfläche liegenden Raumpunkten erstellt wird, insbesondere mittels einer Best-Fit-Methode.

15. Computerprogrammprodukt mit Programmcode, der auf einem maschinenlesbaren Träger gespeichert ist, zur Bereitstellung, Steuerung und Durchführung des Verfahrens nach einem der Ansprüche 9 bis 14, insbesondere wenn das Programm auf einer als Auswerte- und Steuereinheit des Konstruktionsvermessungsgeräts (10) nach einem der Ansprüche 1 bis 8 ausgebildeten elektronischen Datenverarbeitungseinheit ausgeführt wird.

## Claims

1. Construction surveying device (10) for measuring and marking spatial points (1a, 1b, 1c) in the context of building and/or extending buildings - in particular interior construction - having
• a base (11),
• an upper part (12) mounted on the base (11) such that it is rotatable about a rotational axis,
• a sighting unit (13), which is pivotably mounted about a pivot axis on the upper part (12), provides a distance measuring functionality and has a laser source, configured for emitting a laser beam (14), and a laser light detector, and
• an evaluation and control unit (20),
wherein
• a first and a second rotational drive make it possible to drive and align the upper part (12) or the sighting unit (13),
• a spatial alignment of the sighting unit with respect to the base (11) can be captured by means of two goniometers and
• the evaluation and control unit is connected to the laser source, the laser light detector and the goniometers in order to associate a captured distance with a corresponding alignment and thereby determine coordinates for spatial points,
**characterized in that**
the construction surveying device (10) has a horizontal line projection functionality, which runs at least partly automatically after being triggered, for measuring and marking spatial points (1a, 1b, 1c) along a horizontal line (15) extending in a horizontal plane (16) on an arbitrarily shaped surface, in the context of which, proceeding from a known first spatial point (1a) which defines the horizontal plane (16) and after changing the azimuth alignment of the sighting unit (13), the elevation alignment of the sighting unit (13) is changed, in each case under automatic control by the evaluation and control unit by means of the first and/or the second rotational drive, in such a way that precisely those spatial points (1b) which - in the corresponding respective current azimuth alignment - lie on the horizontal line (15) are targeted and marked by the laser beam (14).

2. Construction surveying device (10) according to Claim 1,
**characterized in that** the horizontal line projection functionality is set so that,
for the purposes of adapting the elevation alignment of the sighting unit (13), which occurs as a reaction to changing the azimuth alignment - more particularly instantaneously when changing the azimuth alignment -
• the spatial alignment of the sighting unit with respect to the base (11) is captured continuously by means of the two goniometers and
• the distance from currently targeted spatial points on the surface is captured continuously,
said capture more particularly being carried out with a frequency of at least 10 Hz.

3. Construction surveying device (10) according to Claim 1 or 2,
**characterized in that**
the azimuth alignment of the sighting unit (13) is continuously changed in the context of the horizontal line projection functionality, under automatic control by the evaluation and control unit by means of the first and/or the second rotational drive, within a defined azimuth angle range, more particularly with an azimuth angular velocity of at least 12° per second, and, in the process, the elevation alignment of the sighting unit (13) is in each case continuously adapted in such an automatic fashion instantaneously - i.e. parallel in time to the continuous change of the azimuth alignment - that the projection of the laser beam (14) on the surface is always guided along the horizontal line (15).

4. Construction surveying device (10) according to Claim 2 or 3,
**characterized in that**
• the construction surveying device is set so that the azimuth alignment of the sighting unit (13) is automatically continuously changed within an azimuth angle range of 360°, more particularly with an azimuth angular velocity of at least 24° per second, specifically 36° per second, or
• the horizontal line projection functionality is equipped in such a way that, after predetermining a desired path length for the horizontal line on the surface, proceeding from the first spatial point (1a), the azimuth alignment of the sighting unit (13) is continuously changed under automatic control by the evaluation and control unit by means of the first and/or the second rotational drive until the desired path length on the surface has been traveled by the projection of the laser beam (14) along the horizontal line (15).

5. Construction surveying device (10) according to any one of Claims 2 to 4,
**characterized in that** the construction surveying device is set so that
the azimuth alignment of the sighting unit (13) is automatically continuously changed within the specified azimuth angle range in such a way that the projection of the laser beam (14) on the surface is repeatedly, i.e. in a number of passes, guided along the horizontal line (15) and, proceeding from measurement data, which is stored in the context of one or more initial passes for guiding the projection of the laser beam along the horizontal line (15), for spatial points lying on the horizontal line (15) is used, so that, in subsequent passes, the instantaneous adaptation of the elevation alignment of the sighting unit (13) when changing the azimuth alignment is optimized, and hence the guiding along the horizontal line (15) is also optimized, more particularly such that the projection of the laser beam is guided along the horizontal line (15) at a higher speed and/or more precisely as a result thereof.

6. Construction surveying device (10) according to any one of Claims 2 to 5,
**characterized in that**,
in the context of the horizontal line projection functionality for optimizing the corresponding adaptation of the elevation alignment of the sighting unit (13), taking place instantaneously with the change of the azimuth alignment, a mathematical model is used to describe the shape of the surface, in particular wherein the surface is assumed to be a planar area, a lateral area of a cylinder or a surface of a sphere, in particular wherein the mathematical model is stored in a storage medium of the evaluation and control unit and/or created, more particularly by means of a best fit method, on the basis of stored measurement data or from measurement data specifically captured for this purpose relating to distance from and angles with respect to spatial points lying on the surface.

7. Construction surveying device (10) according to any one of Claims 1 to 6,
**characterized in that**
the sighting unit (13) is configured in such a way
• that the laser beam (14), which can be emitted by the laser source, serves as a measurement and marking laser beam or
• that the laser source has two partial laser sources, which are configured separately for emitting a first portion of the laser beam (14) as marking laser beam in the visible wavelength range and a second portion of the laser beam (14) - extending coaxially with or with a slight parallel offset to the marking laser beam - as measurement laser beam in the near infrared wavelength range,
and the distance from the spatial point of the object surface (3, 3') targeted by the laser beam (14) can be established by the evaluation and control unit on the basis of portions of the laser beam (14), reflected on the object surface (3, 3'), which are received by the laser light detector.

8. Construction surveying device (10) according to any one of Claims 1 to 7,
**characterized in that**
an external reference to the horizontal property can be created by
• inclination sensor means, which are configured to determine the inclination with respect to the gravitational field vector of the Earth about two axes and to transmit the measurement data thereof to the evaluation and control unit, more particularly wherein the inclination sensor means are integrated into the base (11),
and/or
• calibration measurement in advance of a reference situated in a known external alignment, more particularly of two end points of a plumb rod or plumb line, mounted like a pendulum, or of a reference plane, which is assumed to be aligned horizontally, and derivation of the external horizontal property resulting therefrom by means of the evaluation and control unit.

9. Method for measuring and marking spatial points in a common horizontal plane (16) of a construction by means of a construction surveying device (10) according to any one of Claims 1 to 8, comprising the following steps:
• aligning the sighting unit (13) and emitting the laser beam (14) onto a first spatial point (1a);
• measuring the first spatial point (1a) and storing the spatial coordinates thereof;
• changing the azimuth alignment of the sighting unit (13);
• adapting the elevation alignment of the sighting unit (13), which takes place after changing the azimuth alignment, in each case under automatic control by the evaluation and control unit by means of the first and/or the second rotational drive, in such a way that precisely those spatial points (1b) which - in the corresponding respective current azimuth alignment - lie on the horizontal line (15) are targeted and marked by the laser beam (14).

10. Method according to Claim 9,
**characterized in that**,
for the purposes of adapting the elevation alignment of the sighting unit (13), which occurs as a reaction to changing the azimuth alignment, more particularly instantaneously when changing the azimuth alignment,
• the spatial alignment of the sighting unit with respect to the base (11) is captured continuously by means of the two goniometers and
• the distance from currently targeted spatial points on the surface is captured continuously,
said capture more particularly being carried out with a frequency of at least 10 Hz.

11. Method according to Claim 9 or 10,
**characterized in that**
the azimuth alignment of the sighting unit (13) is continuously changed under automatic control by the evaluation and control unit by means of the first and/or the second rotational drive, within a defined azimuth angle range, more particularly with an azimuth angular velocity of at least 12° per second, and, in the process, the elevation alignment of the sighting unit (13) is in each case continuously adapted in such an automatic fashion instantaneously - i.e. parallel in time to the continuous change of the azimuth alignment - that the projection of the laser beam (14) on the surface is always guided along the horizontal line (15).

12. Method according to any one of Claims 9 to 11,
**characterized in that**
• the azimuth alignment of the sighting unit (13) is automatically continuously changed within an azimuth angle range of 360°, more particularly with an azimuth angular velocity of at least 24° per second, specifically 36° per second, or,
• after predetermining a desired path length for the horizontal line on the surface, proceeding from the first spatial point (1a), the azimuth alignment of the sighting unit (13) is continuously changed under automatic control by the evaluation and control unit by means of the first and/or the second rotational drive until the desired path length on the surface has been traveled by the projection of the laser beam (14) along the horizontal line (15).

13. Method according to any one of Claims 9 to 12,
**characterized in that**
the azimuth alignment of the sighting unit (13) is automatically continuously changed within the specified azimuth angle range in such a way that the projection of the laser beam (14) on the surface is repeatedly, i.e. in a number of passes, guided along the horizontal line (15) and, proceeding from measurement data, which is stored in the context of one or more initial passes for guiding the projection of the laser beam along the horizontal line (15), for spatial points lying on the horizontal line (15) is used, so that, in subsequent passes, the instantaneous adaptation of the elevation alignment of the sighting unit (13) when changing the azimuth alignment is optimized, and hence the guiding along the horizontal line (15) is also optimized, more particularly such that the projection of the laser beam is guided along the horizontal line (15) at a higher speed and/or more precisely as a result thereof.

14. Method according to any one of Claims 9 to 13,
**characterized in that**,
for optimizing the corresponding adaptation of the elevation alignment of the sighting unit (13), taking place instantaneously with the change of the azimuth alignment, a mathematical model is used to describe the shape of the surface, in particular wherein the surface is assumed to be a planar area, a lateral area of a cylinder or a surface of a sphere, in particular wherein the mathematical model is stored in a storage medium of the evaluation and control unit and/or created, more particularly by means of a best fit method, on the basis of stored measurement data or from measurement data specifically captured for this purpose relating to distance from and angles with respect to spatial points lying on the surface.

15. Computer program product having program code, which is stored on a machine-readable medium, for providing, controlling and executing the method according to any one of Claims 9 to 14, in particular if the program is executed on an electronic data processing unit embodied as evaluation and control unit of the construction surveying device (10) according to any one of Claims 1 to 8.

## Revendications

1. Appareil de mesure de construction (10) pour mesurer et marquer des points dans l'espace (1a, 1b, 1c) dans le cadre de la construction et/ou de l'aménagement - en particulier de l'aménagement intérieur - de bâtiments avec
• une base (11),
• une partie supérieure (12) positionnée rotative autour d'un axe de rotation sur la base (11),
• une unité de ciblage (13), positionnée pivotante autour d'un axe de pivotement, qui met à disposition une fonctionnalité de mesure de distance, avec une source laser configurée pour l'émission d'un faisceau laser (14) et un détecteur de lumière laser et
• une unité d'exploitation et de commande
cependant
• qu'un premier et un second entraînement rotatif rendent la partie supérieure (12) et/ou l'unité de ciblage (13) capable d'être entraînée et orientée,
• qu'une orientation spatiale de l'unité de ciblage par rapport à la base (11) peut être détectée par deux goniomètres et
• que l'unité d'exploitation et de commande est reliée à la source laser, au détecteur de lumière laser ainsi qu'aux goniomètres pour faire correspondre une distance détectée à une orientation correspondante et pour déterminer ainsi des coordonnées pour des points dans l'espace,
**caractérisé en ce que** l'appareil de mesure de construction (10) présente une fonctionnalité de projection de lignes horizontales qui se déroule, après déclenchement, au moins partiellement automatiquement pour mesurer et marquer des points dans l'espace (1a, 1b, 1c) le long d'une ligne horizontale (15) qui se trouve dans un plan horizontal (16) sur une surface formée de manière quelconque, dans le cadre de laquelle, en partant d'un premier point dans l'espace connu (1a) qui définit le plan horizontal (16), après modification de l'orientation azimutale de l'unité de ciblage (13), l'orientation d'élévation de l'unité de ciblage (13) est modifiée respectivement en étant commandée de manière automatique par l'unité d'évaluation et de commande au moyen du premier et/ou du second entraînement rotatif de telle manière que précisément les points dans l'espace (1b) qui se situent sur la ligne horizontale (15) - dans l'orientation azimutale actuelle respective correspondante - sont balayés par le faisceau laser (14) et marqués.

2. Appareil de mesure de construction (10) selon la revendication 1, **caractérisé en ce que** la fonctionnalité de projection de lignes horizontales est agencée de telle manière que, pour l'adaptation de l'orientation d'élévation de l'unité de ciblage (13) qui se fait de manière réactive après modification de l'orientation azimutale en particulier lors de la modification de l'orientation azimutale,
• l'orientation spatiale de l'unité de ciblage par rapport à la base (11) est détectée en continu par les deux goniomètres et
• la distance par rapport aux points dans l'espace actuellement ciblés sur la surface est détectée en continu,
en particulier avec une fréquence d'au moins 10 Hz.

3. Appareil de mesure de construction (10) selon la revendication 1 ou 2, **caractérisé en ce que**, dans le cadre de la fonctionnalité de projection de lignes horizontales, l'orientation azimutale de l'unité de ciblage (13) est modifiée en étant commandée automatiquement par l'unité d'exploitation et de commande au moyen du premier et/ou du second entraînement rotatif en continu au sein d'une plage d'angle azimutal définie, en particulier avec une vitesse d'angle azimutale d'au moins 12° par seconde, et simultanément l'orientation d'élévation de l'unité de ciblage (13) est adaptée respectivement en continu de manière automatique - c'est-à-dire temporellement parallèlement à la modification continue de l'orientation azimutale - de telle manière que la projection du faisceau laser (14) sur la surface est toujours guidée le long de la ligne horizontale (15).

4. Appareil de mesure de construction (10) selon la revendication 2 ou 3, **caractérisé en ce que**
• l'appareil de mesure de construction est agencé de telle manière que l'orientation azimutale de l'unité de ciblage (13) est modifiée automatiquement en continu au sein d'une plage d'angle azimutal de 360°, en particulier avec une vitesse d'angle azimutale d'au moins 24° par seconde, en particulier de 36° par seconde ou
• la fonctionnalité de projection de lignes horizontales est équipée de telle manière qu'après avoir défini une longueur de trajet souhaitée pour la ligne horizontale sur la surface en partant du premier point dans l'espace (1a), l'orientation azimutale de l'unité de ciblage (13) est modifiée en continu en étant commandée automatiquement par l'unité d'évaluation et de commande au moyen du premier et/ou du second entraînement rotatif jusqu'à ce que la longueur de trajet souhaitée soit balayée avec la projection du faisceau laser (14) le long de la ligne horizontale (15) sur la surface.

5. Appareil de mesure de construction (10) selon l'une des revendications 2 à 4, **caractérisé en ce que** l'appareil de mesure de construction est agencé de telle manière que l'orientation azimutale de l'unité de ciblage (13) est modifiée automatiquement en continu au sein de la plage d'angle azimutal déterminée de telle manière que la projection du faisceau laser (14) est guidée de manière répétée sur la surface, c'est-à-dire en plusieurs passages, le long de la ligne horizontale (15) et en partant de données de mesure mémorisées dans le cadre d'un ou de plusieurs passages initiaux du guidage de la projection du faisceau laser le long de la ligne horizontale (15) pour des points dans l'espace situés sur la ligne horizontale (15) pour optimiser, lors de passages ultérieurs, l'adaptation volante de l'orientation d'élévation de l'unité de ciblage (13) lors de la modification de l'orientation azimutale et donc aussi le guidage le long de la ligne horizontale (15), en particulier pour que le guidage de la projection du faisceau laser le long de la ligne horizontale (15) se fasse donc avec une vitesse plus élevée et/ou plus précisément.

6. Appareil de mesure de construction (10) selon l'une des revendications 2 à 5, **caractérisé en ce que** l'on se sert, dans le cadre de la fonctionnalité de projection de lignes horizontales pour optimiser l'adaptation volante correspondante de l'orientation d'élévation de l'unité de ciblage (13) qui se fait pour la modification de l'orientation azimutale, d'un modèle mathématique pour décrire la forme de la surface, en particulier cependant que la surface est supposée être une surface plane, une surface d'enveloppe de cylindre ou une surface sphérique, en particulier cependant que le modèle mathématique est stocké dans un moyen de stockage de l'unité d'évaluation et de commande et/ou est mis au point à l'aide de données de mesure mémorisées ou saisies spécialement pour cela concernant la distance et les angles par rapport aux points dans l'espace situés sur la surface, en particulier au moyen d'une méthode du meilleur ajustement.

7. Appareil de mesure de construction (10) selon l'une des revendications 1 à 6, **caractérisé en ce que** l'unité de ciblage (13) est configurée telle que
• le faisceau laser (14) qui peut être émis par la source laser sert de faisceau laser de mesure et de marquage ou
• que la source laser présente deux sources partielles de laser qui sont configurées séparément pour émettre une première partie du faisceau laser (14) comme faisceau laser de marquage dans la gamme de longueur d'ondes visibles ou une seconde partie du faisceau laser (14) - qui est coaxiale ou décalée légèrement parallèlement par rapport au faisceau laser de marquage - comme faisceau laser de mesure dans la gamme de longueur d'ondes infrarouge proche
et que la distance par rapport au point dans l'espace de la surface de l'objet (3, 3') peut être déterminée par l'unité d'évaluation et de commande à l'aide de parties du faisceau laser (14) réfléchies sur la surface de l'objet (3, 3') qui sont reçues par le détecteur de lumière laser.

8. Appareil de mesure de construction (10) selon l'une des revendications 1 à 7, **caractérisé en ce qu'**une référence extérieure par rapport à l'horizontalité peut être produite par
• des moyens détecteurs d'inclinaison qui sont configurés pour déterminer l'inclinaison par rapport au vecteur de champ de pesanteur terrestre autour de deux axes et pour transmettre leurs données de mesure à l'unité d'évaluation et de commande, en particulier les moyens détecteurs d'inclinaison étant intégrés dans la base (11) et/ou
• mesure au préalable d'une référence qui se situe dans une orientation extérieure connue, en particulier de deux points d'extrémité d'une canne ou d'un fil à plomb suspendu en oscillant ou d'un plan de référence supposé orienté horizontalement et dérivation, à partir de celle-ci, de l'horizontalité extérieure par l'unité d'évaluation et de commande.

9. Procédé pour la mesure et le marquage de points dans l'espace dans un plan horizontal commun (16) d'une construction au moyen d'un appareil de mesure de construction (10) selon l'une des revendications 1 à 8 avec les étapes suivantes :
• orientation de l'unité de ciblage (13) et émission du faisceau laser (14) sur un premier point dans l'espace (1a) ;
• mesure du premier point dans l'espace (1a) et mémorisation de ses coordonnées dans l'espace ;
• modification de l'orientation azimutale de l'unité de ciblage (13) ;
• après modification de l'orientation azimutale en étant commandée de manière respectivement automatique par l'unité d'évaluation et de commande au moyen du premier et/ou du second entraînement rotatif, adaptation réalisée de l'orientation d'élévation de l'unité de ciblage (13) de telle manière que précisément les points dans l'espace (1b) qui se situent sur la ligne horizontale (15) - dans l'orientation azimutale actuelle respective correspondante - sont balayés par le faisceau laser (14) et marqués.

10. Procédé selon la revendication 9, **caractérisé en ce que** pour l'adaptation de l'orientation d'élévation de l'unité de ciblage (13) qui se fait de manière réactive après la modification de l'orientation azimutale en particulier lors de la modification de l'orientation azimutale,
• l'orientation spatiale de l'unité de ciblage par rapport à la base (11) est détectée en continu par les deux goniomètres et
• la distance par rapport aux points dans l'espace actuellement ciblés sur la surface est détectée en continu,
en particulier avec une fréquence d'au moins 10 Hz.

11. Procédé selon la revendication 9 ou 10, **caractérisé en ce que** l'orientation azimutale de l'unité de ciblage (13) est modifiée en étant commandée automatiquement par l'unité d'exploitation et de commande au moyen du premier et/ou du second entraînement rotatif en continu au sein d'une plage d'angle azimutal définie, en particulier avec une vitesse d'angle azimutale d'au moins 12° par seconde, et simultanément l'orientation d'élévation de l'unité de ciblage (13) est adaptée respectivement en continu de manière automatique - c'est-à-dire temporellement parallèlement à la modification continue de l'orientation azimutale - de telle manière que la projection du faisceau laser (14) sur la surface est toujours guidée le long de la ligne horizontale (15).

12. Procédé selon l'une des revendications 9 à 11, **caractérisé en ce que**
• l'orientation azimutale de l'unité de ciblage (13) est modifiée automatiquement en continu au sein d'une plage d'angle azimutal de 360°, en particulier avec une vitesse d'angle azimutale d'au moins 24° par seconde, en particulier de 36° par seconde ou
• qu'après avoir défini une longueur de trajet souhaitée pour la ligne horizontale sur la surface en partant du premier point dans l'espace (1a), l'orientation azimutale de l'unité de ciblage (13) est modifiée en continu en étant commandée automatiquement par l'unité d'évaluation et de commande au moyen du premier et/ou du second entraînement rotatif jusqu'à ce que la longueur de trajet souhaitée soit balayée avec la projection du faisceau laser (14) le long de la ligne horizontale (15) sur la surface.

13. Procédé selon l'une des revendications 9 à 12, **caractérisé en ce que** l'orientation azimutale de l'unité de ciblage (13) est modifiée automatiquement en continu au sein de la plage d'angle azimutal déterminée de telle manière que la projection du faisceau laser (14) est guidée de manière répétée sur la surface, c'est-à-dire en plusieurs passages, le long de la ligne horizontale (15) et en partant de données de mesure mémorisées dans le cadre d'un ou de plusieurs passages initiaux du guidage de la projection du faisceau laser le long de la ligne horizontale (15) pour des points dans l'espace situés sur la ligne horizontale (15) pour optimiser, lors de passages ultérieurs, l'adaptation volante de l'orientation d'élévation de l'unité de ciblage (13) lors de la modification de l'orientation azimutale et donc aussi le guidage le long de la ligne horizontale (15), en particulier pour que le guidage de la projection du faisceau laser le long de la ligne horizontale (15) se fasse donc avec une vitesse plus élevée et/ou plus précisément.

14. Procédé selon l'une des revendications 9 à 12, **caractérisé en ce que** l'on se sert, dans le cadre de la fonctionnalité de projection de lignes horizontales pour optimiser l'adaptation correspondante de l'orientation d'élévation de l'unité de ciblage (13) qui se fait de manière volante pour la modification de l'orientation azimutale, d'un modèle mathématique pour décrire la forme de la surface, en particulier cependant que la surface est supposée être une surface plane, une surface d'enveloppe de cylindre ou une surface sphérique, en particulier cependant que le modèle mathématique est stocké dans un moyen de stockage de l'unité d'évaluation et de commande et/ou est mis au point à l'aide de données de mesure mémorisées ou saisies spécialement pour cela concernant la distance et les angles par rapport aux points dans l'espace situés sur la surface, en particulier au moyen d'une méthode du meilleur ajustement.

15. Produit de programme d'ordinateur avec code de programme qui est mémorisé sur un support lisible par machine pour la mise à disposition, la commande et l'exécution du procédé selon l'une des revendications 9 à 14, en particulier lorsque le programme est réalisé sur une unité de traitement de données électronique configurée comme une unité d'évaluation et de commande de l'appareil de mesure de construction (10) selon l'une des revendications 1 à 8.
